# EUROPÄISCHE PATENTSCHRIFT

(11) **EP 3 456 513 B1**
(45) Veröffentlichungstag und Bekanntmachung des Hinweises auf die Patenterteilung: **12.05.2021**
(21) Anmeldenummer: 18184378.0
(22) Anmeldetag: 13.09.2011
(51) Int. Cl.: B29C 64/245, B29C 64/236, B29C 64/205, B29C 64/393, B29C 64/176, B33Y 10/00, B33Y 30/00, B33Y 80/00, B33Y 50/02

(54) **VORRICHTUNG ZUR GENERATIVEN HERSTELLUNG DREIDIMENSIONALER BAUTEILE**
DEVICE FOR THE GENERATIVE PRODUCTION OF THREE-DIMENSIONAL COMPONENTS
DISPOSITIF DE FABRICATION GÉNÉRATIVE DE COMPOSANTS TRIDIMENSIONNELS

(30) Priorität: 02.03.2011 DE 202011003443 U
(43) Veröffentlichungstag der Anmeldung: 20.03.2019
(62) Teilanmeldung aus: 11757848.4
(73) Patentinhaber: BEGO Medical GmbH, 28359 Bremen (DE)
(72) Erfinder: Uckelmann, Ingo, 28359 Bremen (DE); Höges, Simon, 28359 Bremen (DE)
(74) Vertreter: Eisenführ Speiser

(56) Entgegenhaltungen:
- US-A1- 2004 145 639

## Beschreibung

Die Erfindung betrifft eine Vorrichtung zur Herstellung von Produkten mit individueller Geometrie, umfassend eine Substratplatte, eine relativ zur Substratplatte verfahrbare Materialauftragsvorrichtung zum Auftragen von Material auf die Substratplatte, vorzugsweise oberhalb der Substratplatte, und eine Steuerungsvorrichtung, welche signaltechnisch mit der Materialauftragsvorrichtung gekoppelt ist.

### I. Stand der Technik

Generative Fertigungsverfahren, d.h. Fertigungsverfahren, bei denen ein Material in einem additiven Herstellungsprozess zu einem individuellen Produkt geformt wird, finden ihre Anwendung im Bereich der Herstellung von Prototypen und haben inzwischen auch in der Produktherstellung, insbesondere bei der Anfertigung individuell geformter Produkte oder von Kleinstserien, ihre Anwendung gefunden. Als ein generatives oder additives Fertigungsverfahren ist nach dieser Beschreibung und den anhängenden Ansprüchen insbesondere jegliches in ASTM F2792-10 definiertes additives Herstellungsverfahren verstanden werden, beinhaltend jedes Verfahren der Materialverbindung zur Herstellung von Objekten aus 3D Modelldaten, insbesondere 3D-Drucken, Fused Deposition Modeling, selektives Lasersintern oder-schmelzen und Stereolithographie.

Aus EP 1021997B1 ist es beispielsweise bekannt, individuell geformten Zahnersatz oder dentale Hilfsteile mittels eines selektiven Lasersinterprozesses unter bestimmten Parametern herzustellen. Das SLS-oder SLM-Verfahren ist prinzipiell in EP 0734842 A1 beschrieben.

Neben einem solchen, für Zahnersatz besonders geeigneten selektivem Lasersinter- oder Laserschmelzverfahren (SLS, SLM) für metallische Pulver, können für andere Produkte auch andere generative Fertigungsverfahren geeignet sein. So können beispielsweise Verfahren, bei denen ein Granulat oder anderes festes Material durch einen hochenergetischen Strahl, wie beispielsweise einen Laserstrahl oder Elektronenstrahl gesintert oder geschmolzen und auf diese Weise verbunden und ausgehärtet wird, oder Verfahren, bei denen ein in fester oder flüssiger Form vorliegender Kunststoff durch einen hochenergetischen Strahl, wie beispielsweise einen Elektronenstrahl, einen Laser- oder gebündelten Lichtstrahl durch Photopolymerisation selektiv ausgehärtet wird, eingesetzt werden. Andere, vom Gegenstand der Erfindung umfasste Verfahren bzw. Vorrichtungen arbeiten nach einem Prinzip, bei dem das Material ebenfalls schichtweise aufgetragen wird, hierbei aber keine homogene zusammenhängende Schicht aufgetragen wird, sondern die Schicht bereits selektiv aufgetragen und die aufgetragenen Bereiche ausgehärtet werden. Solche Verfahren sind beispielsweise als Laser Engineered Net Shaping (LENS) oder Laserauftragschweißen bekannt.

Bei einem anderen, von der Erfindung umfassten Prinzip wird das Material ebenfalls schichtweise als homogene Schicht oder als selektiv aufgetragene Bereiche einer Schicht aufgetragen und ausgehärtet, hierbei aber auf die Verwendung eines hochenergetischen Strahls verzichtet. So sind beispielsweise Verfahren bekannt, bei denen ein erstes Material als Schicht aufgetragen wird und hierauf folgend dieses Material selektiv in vorbestimmten Bereichen mit einem zweiten Material gemischt und hierdurch ausgehärtet wird, beispielsweise indem ein flüssiges Bindermaterial in den vorbestimmten Bereichen injiziert wird oder indem das erste und zweite Material eine chemisch reaktionsfähige Harz + Härter Kombination darstellen. In wiederum anderen Verfahren wird das Material nicht als homogene zusammenhängende Schicht aufgetragen, sondern das Material wird nur in vorbestimmten Bereichen einer Schicht selektiv aufgetragen und härtet nachfolgend selbststätig aus. Dies kann beispielsweise erreicht werden, indem das Material als chemisch reaktionsfähige oder reagierende Mischung aufgetragen wird, die nachfolgend selbststätig durch chemische Reaktion aushärtet, indem das Material schmelzflüssig aufgetragen wird und nachfolgend durch Abkühlung aushärtet oder indem das Material als ein mit der Umgebungsatmosphäre, beispielsweise Luft, reaktionsfähiges Material ausgebildet ist und nach dem selektiven Auftrag aushärtet. Solche, von der Erfindung umfasste Verfahren sind beispielsweise als 3D Printing, Contour Crafting, Fused Deposition Modeling (FDM), Laminated Object Modelling (LOM), Polyamidguss, und als Multi-Jet Modeling bekannt.

Diese generativen Fertigungsverfahren arbeiten regelmäßig solcherart, dass auf einer Substratplatte aufeinanderfolgend Schichten des aushärtbaren Materials aufgetragen werden, beispielsweise indem die Substratplatte sukzessive und diskontinuierlich in ein flüssiges Bad des aushärtbaren Materials abgesenkt wird oder indem mittels einer Pulverauftragsvorrichtung sukzessive Schichten auf der Substratplatte übereinander aufgetragen werden. Nach jedem Schichtauftragsvorgang werden bestimmte Teile der Schicht oderwie im Falle des selektiven Auftrags der Schicht - die gesamte Schicht selektiv ausgehärtet und auf diese Weise das Produkt schichtweise aufgebaut. Nach Fertigstellung des Produkts durch Aushärtung der letzten Schicht können gegebenenfalls vorhandene nicht ausgehärtete Bereiche des Materials entfernt und häufig wiederverwendet werden.

Ein grundsätzliches Problem der generativen Fertigungsverfahren ist die lange Zeitdauer, die zwischen der Erstellung der Fertigungsdaten und der Fertigstellung des Produkts vergeht. Es ist bekannt, auf einer Substratplatte mehrere Produkte gleichzeitig generativ aufzubauen, um auf diese Weise die Anzahl der in einer bestimmten Zeitspanne hergestellten Produkte zu erhöhen. Dieses Vorgehen ist insbesondere bei Produkten mit sehr kleinen Abmessungen in Bezug auf die Abmessungen der Substratplatte sinnvoll und führt zu einer wirksamen Steigerung der Produktivität.

Aus EP 0734842 A1 ist es bekannt, die Stillstandszeit einer Fertigungsvorrichtung zu verringern, indem eine auf einem Träger lösbar befestigte Substratplatte verwendet wird und hierdurch unmittelbar nach Fertigstellung der Produkte auf dieser Substratplatte die Substratplatte entnommen und durch eine neue Substratplatte ersetzt werden kann, um einen neuen Herstellungsprozess zu starten. Während diese Ausgestaltung es ermöglicht, dass die Zeitdauer, die benötigt wird, um die Produkte von der Substratplatte zu entfernen, nicht in die Stillstandszeit der Fertigungsvorrichtung einfließt, weist die Vorrichtung nach wie vor den Nachteil auf, dass erst dann, wenn die Fertigungsdaten aller Produkte vorliegen, die auf einer Substratplatte gefertigt werden sollen, der Fertigungsprozess gestartet werden kann und die Gesamtdauer für die Fertigung eines Produkts hierdurch insbesondere bei einer individuellen Fertigung vieler kleiner Produkte nicht entscheidend herabgesetzt werden kann.

Aus WO 2008/128502 ist eine Vorrichtung bekannt, welche dem gleichen Grundgedanken folgt und eine Fördereinrichtung innerhalb der Fertigungsvorrichtung vorsieht, mit der ein oder mehrere Baubehälter sowie Dosier- oder Vorratsbehälter gefördert werden können, um hierdurch ein einfaches, schnelles und sicheres Pulverhandling innerhalb der Fertigungsvorrichtung zu erzielen. Durch diese Vorrichtung kann in schneller Weise eine Fertigung von Produkten in einem Baubehälter mittels eines Pulvermaterials erfolgen und darauffolgend nach der Fertigstellung dieser Produkte in einem zweiten Baubehälterdie Fertigung von Produkten mit einem anderen Pulvermaterial erfolgen. Allerdings benötigt auch bei dieser Fertigungsvorrichtung der Fertigungsprozess mindestens so lange, wie zwischen der Erstellung der Fertigungsdaten aller Produkte auf der Substratplatte und der Fertigstellung der Produkte vergeht, so dass die Fertigung in Bezug auf jedes einzelne einer Mehrzahl von Produkten, die aufgebaut werden, nach wie vor einen verhältnismäßig langen Zeitraum in Anspruch nimmt.

Aus WO 2004/014636 ist ein Verfahren zum schichtweisen generativen Herstellen von dreidimensionalen Objekten bekannt, bei dem in zwei Baubereichen mehrere Objekte simultan hergestellt werden. Hierbei wird in einem Baubereich eine Schicht aufgetragen und in einem anderen Baubereich eine selektive Aushärtung mittels einer Strahlung erzielt. Es sind vier Prozesskammern vorgesehen, die in Form von räumlich voneinander getrennten Einzelkammern oder als Teilbereiche von zwei Doppelkammern oder einer Vierfachkammer vorliegen können. Weiterhin ist vorgesehen, dass ein Laser über eine Umschalteinrichtung mit jeweils einer der Prozesskammern verbindbar ist. Die so beschriebene Vorrichtung und das zur generativen Herstellung von Produkten mit dieser Vorrichtung beschriebene Verfahren weist den Nachteil auf, dass zum Zwecke der simultanen Fertigung mit alternierender Aushärtung und Schichtauftrag in den jeweiligen Prozesskammern eine separate Steuerung des Auftragsvorgangs in jeder der Prozesskammern erforderlich ist. Die Vorrichtung und das Verfahren eignet sich zwar für die aufwendige Spezialanwendung einer Fertigung von mehreren Produkten mit unterschiedlichem Ausgangsmaterial in entsprechend unterschiedlichen Prozesskammern, der Fertigungsprozess und die Vorrichtung ist jedoch sowohl im Aufbau als auch in der Steuerung aufwendig und kann daher hinsichtlich seiner Produktivität der Effizienz zur Fertigung zahlreicher kleiner Produkte und der Zeit, die zwischen der Fertigstellung der Fertigungsdaten eines Produkts und der Fertigstellung des Produkte selbst vergeht, weiter optimiert werden.

Die US 2004/0145629 A1 betrifft Tinten für Tintenstrahldrucker.

### II. Aufgabe der Erfindung

Während mit den bekannten Fertigungsverfahren und -vorrichtungen nur individuelle Produkte, deren Größe etwa die Substratplatte einnehmen, in einer sowohl produktiven Fertigungsweise als auch mit einer für jedes Einzelprodukt vertretbaren Gesamtfertigungsdauer hergestellt werden können, ist es für Produkte, deren Abmessungen weitaus kleiner sind als die Substratplatte, nur möglich, die Produktivität durch gemeinsame Fertigung mehrerer Produkte auf einer Substratplatte zu sichern, die Fertigungszeit für ein einzelnes Produkt kann jedoch in diesem Fall nicht auf eine wünschenswert kleine Zeitspanne gebracht werden, sondern wird durch die Erstellung von Fertigungsdaten aller auf der Substratplatte herzustellenden Produkte und die hierauf folgende gleichzeitige Fertigung aller Produkte erhöht.

Ein weiteres Problem bei der generativen Fertigung von kleinen Produkten, wobei hierunter Produkte verstanden werden sollen, deren Grundfläche kleiner, insbesondere um mindestens eine Größenordnung kleiner ist als die Oberfläche der Substratplatte, besteht darin, dass in vielen Anwendungsbereichen mit individuellen Produktgeometrien die generative Fertigung als Auftragsfertigung erfolgt, wie beispielsweise bei der Herstellung von Zahnersatz in zahntechnischen Laboren. In diesem Fall kommen die einzelnen Aufträge typischerweise nicht gleichzeitig, sondern zeitversetzt beim Benutzer der Fertigungsvorrichtung an. Um in diesem Fall eine hohe Produktivität und Auslastung der Anlage zu erzielen, muss der Benutzer mehrere Aufträge bündeln, um die in den gebündelten Aufträgen enthaltenen Produkte gleichzeitig auf einer Substratplatte zu fertigen. Dies erzeugt jedoch, insbesondere für den zuerst eingegangenen Auftrag, eine erhebliche Verzögerung zwischen Auftragseingang und Fertigstellung des Produkts. Will der Benutzer hingegen jeden Auftrag in der kürzest möglichen Zeit bedienen und das entsprechende individuelle Produkt fertigen, so ist er gezwungen, den Fertigungsprozess auf einer Substratplatte mit lediglich einem oder einigen wenigen Produkten durchzuführen, was zu einer insgesamt geringen Auslastung der Fertigungsvorrichtung und niedriger Produktivität führt.

Ein weiteres Problem der bekannten Fertigungsverfahren und -vorrichtungen liegt darin, dass die maximale Abmessung der Produkte, die hergestellt werden können, begrenzt ist. Dies liegt in erster Linie daran, dass die Produkte auf einer Substratplatte hergestellt werden und daher die Abmessungen der Substratplatte einerseits und den apparativ vorgegebenen Bauraum oberhalb der Substratplatte andererseits nicht überschreiten können. Es besteht ein Bedarf für eine Vorrichtung und ein Verfahren, welche(s) dazu ausgebildet ist um auch Produkte mit großen Abmessungen, insbesondere Produkte, die sich in einer oder zwei Raumrichtung(en) besonders weit im Verhältnis zu den zwei anderen bzw. der anderen Raumrichtung(en) erstrecken, in effizienter Weise generativ zu fertigen.

Ein weiteres Problem bekannter Vorrichtungen zur generativen Fertigung besteht darin, dass diese Anlagen in der Regel sowohl hinsichtlich ihres konstruktiven Aufbaus als auch hinsichtlich ihrer Prozessablaufsteuerung aufwendig ausgebildet sind und daher nicht für eine kostengünstige Anschaffung und Nutzung geeignet sind. Es besteht ein Bedarf für eine Vorrichtung zur generativen Fertigung, welche einfach und kompakt ausgeführt werden kann und idealerweise sowohl die Anschaffungs- als auch die Betriebskosten reduziert.

Es besteht weiterhin ein weiterer Bedarf für eine generative Fertigungsvorrichtung, welche dem Nutzer eine höhere Effizienz in der Anlagennutzung und eine schnellere und wirtschaftlichere Herstellung von individuellen Produkten in einer funktionalen, anspruchsvollen ästhetischen Gestaltung ermöglicht.

Schließlich ist eine Aufgabe der Erfindung, die bekannten Fertigungsverfahren dahingehend weiterzuentwickeln, dass auch bei Produkten, deren Abmessungen im Verhältnis zur Substratplattenabmessung klein sind, sowohl eine hohe Produktivität als auch eine geringe Fertigungsdauer für jedes einzelne Produkt zu erreichen. Es ist ein weiteres Ziel der Erfindung, ein Fertigungsverfahren und eine Fertigungsvorrichtung bereitzustellen, welche den Zeitraum zwischen Auftragseingang für ein individuell zu fertigendes, kleines Produkt und Fertigstellung des Produkts zu verkürzen, ohne hierbei die Produktivität des Fertigungsverfahrens bzw. der Fertigungsvorrichtung nachteilig zu beeinflussen.

### III. Gegenstand der Erfindung

Allgemein ist in dieser Beschreibung und den anhängenden Ansprüchen zu verstehen, dass die für die Fertigung benötigten Daten, also Fertigungsparameter und geometrische Daten der Geometrie der einzelnen Schichten / der Produktgeometrie, aus einer externen Steuerungseinheit, beispielsweise einem an die Fertigungseinrichtung angeschlossenen Computer, an die Fertigungseinrichtung gesendet werden können oder in einer Steuerungseinheit in der Fertigungseinrichtung selbst erstellt und/oder gespeichert sein können. Ebenso ist es möglich, dass ein Fertigungsvorgang extern im Wege eines Cloud Computing aus mehreren miteinander kommunizierenden Rechnern angesteuert und ausgeführt wird.

Vorzugsweise kann die Vorrichtung der eingangs genannten Art gelöst, bei der die Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen, und die Materialauftragsvorrichtung ausgebildet ist, um das Material in einer Ebene aufzutragen, die schräg, insbesondere in einem Winkel der kleiner oder gleich dem Schüttwinkel des Materials ist, zu der Oberfläche der Substratplatte ausgerichtet ist, auf welche das Material aufgetragen wird.

Mit der Vorrichtung wird eine generative Fertigungsvorrichtung vorgeschlagen, die in schneller Weise bei hoher Produktivität kleine Produkte generativ herstellen kann. Die bevorzugte Vorrichtung zeichnet sich dadurch aus, dass die Materialauftragsvorrichtung, mit der die Materialschichten auf die Substratplatte aufgetragen werden, solcherart ausgebildet ist, dass dieser Schichtauftrag schräg zur Oberfläche der Substratplatte ausgeführt werden kann.

Dabei ist unter einem schrägen Auftrag zu verstehen, dass zwischen der Auftragsebene und der Fläche der Substratplatte ein spitzer Winkel einstellbar ist, der insbesondere zwischen einschließlich null und einschließlich neunzig Grad liegen kann, vorzugsweise kleiner 90° und/oder größer 0° ist und insbesondere eine Untergrenze von 5°, 10° oder 30° und/oder eine Obergrenze von 60°, 80° oder 85° aufweisen kann.

Ein wesentliches Element des mit der erfindungsgemäßen Vorrichtung ausgeführten Verfahrens ist das aushärtbare Material, welches aufgetragen und nachfolgend ausgehärtet wird. Das Material muss sich vorzugsweise dazu eignen, um in einem Schichtauftrag schräg zur Oberfläche der Substratplatte eingesetzt zu werden, zugleich aber eine ausreichende geometrische Auflösung der Produktdetails erzielen. Als Materialien können hierfür spezifisch angepasste Pulver, Pulvermischungen, legierte Pulver, Flüssigkeiten mit bestimmter Viskosität oder pastöse Materialien oder Granulate zum Einsatz kommen. Im Sinne dieser Beschreibung wird unter einem aushärtbaren Material ein Material verstanden, welches sich in einem Verarbeitungszustand dazu eignet, um in einer dünnen Schicht homogen oder selektiv aufgetragen zu werden und welches aushärtbar ist. Das aushärtbare Material muss sich weiterhin dazu eignen, mit einer zuvor bereits aufgetragenen Schicht und gegebenfalls benachbarten Schichtanteilen der aktuell aufgetragenen Schicht eine mechanisch belastbare Verbindung auszubilden. Diese mechanische Verbindung wird oftmals im Zuge des Aushärtungsprozesses eingegangen. Das aushärtbare Material übernimmt dabei definitionsgemäß eine mechanisch-strukturelle Funktion des Bauteils. Das aushärtbare Material kann dabei transparent oder eingefärbt sein. Das aushärtbare Material wird erfindungsgemäß alleine, als Mischung aus zwei oder mehr Materialien gleichzeitig oder zeitversetzt nacheinander mittels einer Materialauftragsvorrichtung aufgetragen.

Die Materialauftragsvorrichtung kann dazu ausgebildet, um aus einer Materialquelle das Material zu beziehen und eine geeignete Abgabeform für das Material zu erzeugen und dann ein oder mehrere Materialien gleichzeitig oder zeitversetzt in Form eines Strahls, Pulvers, in Form von Kugeln, Tropfen, Streifen, Raupen oder dergleichen abzugeben. In einer vereinfachten Ausgestaltung kann die Materialauftragsvorrichtung an einem Rahmengestell angeordnet sein und dieses Rahmengestell kann solcherart auf einer Oberfläche angeordnet sein, dass eine Bewegung des Rahmengestells in einer, zwei, drei oder mehr Achsen relativ zur Oberfläche ausgeführt wird. Dabei kann die Oberfläche beispielsweise eine Tischoberfläche sein, auf der das Rahmengestell rollbar aufliegt. Die Oberfläche stellt dann die Substratplatte dar. Die Bewegung zwischen Materialauftragsvorrichtung und Oberfläche kann insbesondere auch durch eine Kombination einer Bewegung der Materialauftragsvorrichtung relativ zum Rahmengestell in einer oder mehr Achsen und eine Bewegung des Rahmengestells zur Oberfläche um hierzu ergänzende eine oder mehrere Achsen ausgeführt sein.

Unter einer Aushärtung kann hierbei eine Aufschmelzung und nachfolgende Erstarrung eines in Draht-, Partikel- oder Pulverform vorliegenden Materials verstanden werden, ebenso ein schmelzflüssiger Auftrag eines Materials mit nachfolgender Erstarrung. Die Aushärtung kann auch durch chemische Reaktion eines Materials mit der Umgebung, chemische Reaktion von zwei oder mehr gleichzeitig oder zeitversetzt aufgetragenen Materialkomponenten miteinander oder chemische oder physikalische Reaktion eines Materials infolge einer Strahlungseinwirkung, beispielsweise als Photopolymerisation erfolgen. Gemäß einer ersten bevorzugten Ausführungsform umfasst die erfindungsgemäße Vorrichtung eine Strahlungsquelle für einen hochenergetischen Strahl und Strahlführungsmittel zum Führen des Strahls auf vorbestimmte Bereiche einer auf die Substratplatte aufgetragenen Materialschicht. Mit dieser Ausführungsform können insbesondere generative Fertigungsverfahren wie SLS, SLM, Auftragsschweißen, LENS oder stereolitographische Verfahren ausgeführt werden.

Die Steuerungsvorrichtung ist ausgebildet, um die Materialauftragsvorrichtung und/oder die Fördervorrichtung so anzusteuern, dass eine Schicht in einer Dicke zwischen 5 µm und 200 µm aufgetragen wird.

Die Aufgabe wird gemäß eines Aspekts der Erfindung gelöst durch eine Vorrichtung zur Herstellung von Produkten mit individueller Geometrie, umfassend eine Substratplatte, eine Materialauftragsvorrichtung zum Auftragen von Material oberhalb der Substratplatte, wobei die Substratplatte in mehrere Substratplattensegmente unterteilt ist, die lösbar miteinander oder mit einem Grundträger verbunden sind.

Die erfindungsgemäße Vorrichtung zeichnet sich dadurch aus, dass oberhalb einer Substratplatte eine Materialauftragsvorrichtung angeordnet ist, mit der in einem Arbeitsgang eine Materialschicht auf alle Substratplattensegmente der Substratplatte aufgetragen werden kann und/oder eine signaltechnisch mit der Materialauftragsvorrichtung gekoppelte Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen. Dabei kann es sich insbesondere um eine relativ zur Substratplatte verfahrbare Materialauftragsvorrichtung zum Auftragen von Material auf die Substratplatte, vorzugsweise eine oberhalb der Substratplatte angeordnete Materialauftragsvorrichtung handeln.

Weiterhin kann eine Strahlungsquelle oberhalb der Substratplatte bereitgestellt sein. Materialauftragsvorrichtung und Strahlungsquelle werden mittels einer Fertigungssteuerungseinrichtung so angesteuert, dass die im ersten Arbeitsgang aufgetragene Materialschicht entweder selektiv in vorbestimmten Bereichen aufgetragen wird und dort aushärtet oder gegebenenfalls in einem weiteren Arbeitsgang mit der Strahlungsquelle oder einem anderen Mittel, beispielsweise durch Zugabe eines weiteren Materials auf vorbestimmte Bereiche der Schicht, selektiv ausgehärtet werden kann.

Die Substratplatte ist erfindungsgemäß in mehrere Segmente unterteilt. Die Segmente können lösbar miteinander verbunden sein, worunter zu verstehen ist, dass jeweils ein Segment mit nur einem benachbarten Segment verbunden ist oder ein Segment mit mehreren umgebenden Segmenten verbunden sein kann. Alternativ ist auch vorgesehen, dass die Segmente nebeneinander angeordnet sind und jedes Segment lösbar mit einem Grundträger verbunden ist. Mit der erfindungsgemäßen Vorrichtung wird es auf diese Weise möglich, mehrere Produkte verteilt auf mehrere Substratplattensegmente generativ zu fertigen und hierbei die Substratplattensegmente solcherart in ihrer Höhe relativ zueinander zu bewegen, dass die Produkte in unterschiedlichen Fertigungsstadien auf den unterschiedlichen Substratplattensegmenten hergestellt werden und das oder die Produkte, die auf einem ersten Substratplattensegment hergestellt worden sind, mit dem Substratplattensegment zu entnehmen und hiervon abzulösen, bevor ein oder mehrere Produkte von einem anderen Substratplattensegment entnommen und abgelöst werden.

Die Vorrichtung kann fortgebildet werden durch eine Strahlungsquelle für einen hochenergetischen Strahl und Strahlführungsmittel zum Führen des Strahls auf vorbestimmte Bereiche einer auf die Substratplatte aufgetragenen Materialschicht.

Die erfindungsgemäße Vorrichtung kann fortgebildet werden, indem die Materialauftragsvorrichtung zum simultanen Auftragen einer Materialschicht oberhalb einer Anzahl der mehreren Substratplattensegmente in einem Arbeitsgang ausgebildet ist.

Weiterhin kann die erfindungsgemäße Vorrichtung fortgebildet werden, indem die Substratplattensegmente und die Materialzufuhreinrichtung mittels eines oder mehrerer Aktuatoren solcherart relativ individuell zueinander bewegbar sind, dass der Abstand zwischen der Ebene der Oberfläche eines ersten Substratplattensegments und eines zur Herstellung eines ersten Produkts darauf aufgetragenen Schichtbereichs der Materialschicht sich von dem Abstand zwischen der Ebene der Oberfläche eines weiteren Substratplattensegments und eines zur Herstellung des weiteren Produkts darauf aufgetragenen Schichtbereichs der selben Materialschicht unterscheidet.

Noch weiter kann die Vorrichtung fortgebildet werden durch eine Materialentfernungsvorrichtung, insbesondere eine Material-Absaugeinrichtung, wobei die Materialentfernungsvorrichtung ausgebildet ist, um nicht ausgehärtetes Material aus einem ein gefertigtes Produkt umgebenden Bereich zu entfernen, und so angeordnet ist, dass sie das Material auf einem ersten Substratplattensegment entfernen kann und hierbei das Material auf einem weiteren, hierzu benachbarten Substratplattensegment belassen kann.

Gemäß einer weiteren bevorzugten Ausführungsform ist vorgesehen, dass die Vorrichtung eine Steuerung aufweist zur Ansteuerung der Führungsvorrichtung des hochenergetischen Strahls oder der Materialauftragsvorrichtung, welche ausgebildet ist, um die Führungsvorrichtung so anzusteuern, dass in einer ersten Phase des Herstellungsvorgangs nur Schichtbereiche einer Schicht selektiv ausgehärtet werden, welche zur Herstellung eines ersten Produktes auf einem ersten Substratplattensegment dienen, in einer letzten Phase des Herstellungsvorgangs nur Schichtbereiche einer Schicht selektiv ausgehärtet werden, welche zur Herstellung eines weiteren Produktes auf einem weiteren Substratplattensegment dienen und in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen.

Die Vorrichtung kann weiter fortgebildet werden durch eine Steuerung zur Ansteuerung der Materialauftragsvorrichtung und/oder zur Ansteuerung von zumindest einem Aktuator zur relativen Bewegung zwischen den Substratplattensegmenten und der Materialauftragsvorrichtung, die ausgebildet ist, um die sich nach Auftrag aller Materialschichten einstellende Höhe des Materialbetts auf einem ersten Substratplattensegment verschieden von der nach Auftrag aller Materialschichten resultierende Höhe des Materialbetts auf einem anderen Substratplattensegment bereitzustellen. Hiermit können auf verschiedenen Substratplattensegmenten Produkte unterschiedlicher Bauhöhe hergestellt und diese gleichzeitig fertiggestellt werden.

Weiterhin ist bevorzugt vorgesehen, dass an der Materialauftragsvorrichtung eine Bearbeitungsvorrichtung zum Abtragen eines Oberflächenanteils der ausgehärteten Materialbereiche, vorzugsweise zum oberflächlichen Beschleifen, der ausgehärteten Materialbereiche einer zuvor aufgetragenen Materialschicht angeordnet ist.

Noch weiter ist bevorzugt vorgesehen, dass die Substratplattensegmente an einem Endlos-Förderband angeordnet sind, welches teilweise oder vollständig in einer Bearbeitungskammer verläuft, die gegen die Umgebung soweit abgedichtet ist, dass darin eine kontrollierte, insbesondere inerte Atmosphäre eingestellt werden kann.

Weiter fortgebildet werden kann die Vorrichtung durch zumindest eine Hubeinrichtung, welche mit jedem Substratplattensegment gekoppelt ist oder gekoppelt werden kann, um während des Herstellungsvorgang das jeweilige Substratplattensegment unabhängig von den anderen Substratplattensegmenten in einer vertikalen Richtung anzuheben und abzusenken.

Noch weiter kann die Vorrichtung fortgebildet werden durch eine einzige Strahlungsquelle, die, insbesondere mittels eines einzigen Strahlengangs, zur Aushärtung der auf allen Substratplattensegmenten hergestellten Produkte genutzt wird.

Noch weiter kann die Vorrichtung fortgebildet werden durch eine zwischen den Substratplattensegmenten angeordnete Trennwand, welche den oberhalb jedes Substratplattensegments bestehenden Bauraum von dem oberhalb eines benachbarten Substratplattensegments bestehenden Bauraum abtrennt.

Es ist bevorzugt weiter vorgesehen, dass die Trennwand zwischen zwei Substratplattensegmenten mit zumindest einem der beiden Substratplattensegmenten verbunden oder gegen dieses Substratplattensegment solcherart abgedichtet ist, dass kein Material zwischen Trennwand und Substratplattensegment hindurchtreten kann.

Gemäß einer weiteren bevorzugten Ausführungsform zeichnet sich die Vorrichtung aus durch eine Steuerung zur Ansteuerung der Materialauftragsvorrichtung oder der Führungsvorrichtung des hochenergetischen Strahls, welche ausgebildet ist, um die Materialauftragsvorrichtung bzw. die Führungsvorrichtung so anzusteuern, dass die Trennwand während des Herstellungsvorgangs des Produkts durch selektives Auftragen bzw. selektives Aushärten des aufgetragenen Materials hergestellt wird.

Schließlich kann die Vorrichtung fortgebildet werden durch eine Steuerung der Führungsvorrichtung des hochenergetischen Strahls und/oder der Materialauftragsvorrichtung, welche ausgebildet ist, um die energiereiche Strahlung und/oder die Materialauftragsvorrichtung über die n-te Materialschicht nach Führungsdaten zu führen, welche aus den geometrischen Daten einer x-ten Querschnittsfläche eines ersten Produkts ermittelt wurden, um Teile der n-ten Materialschicht mittels Einwirken einer energiereichen Strahlung bzw. selektivem Auftrag auszuhärten, die energiereiche Strahlung und/oder die Materialauftragsvorrichtung über eine n+1-te Materialschicht nach Führungsdaten zu führen, welche aus den geometrischen Daten einer x+1-ten Querschnittsfläche des ersten Produkts ermittelt wurden, um Teile der n+1-ten. Materialschicht mittels Einwirken der energiereichen Strahlung bzw. selektivem Auftrag auszuhärten, die energiereiche Strahlung und/oder der Materialauftragsvorrichtung über die n-te Materialschicht nach Führungsdaten zu führen, welche aus den geometrischen Daten einer y-ten Querschnittsfläche eines zweiten Produkts ermittelt wurden, um Teile der n-ten Materialschicht mittels Einwirken der energiereichen Strahlung bzw. selektivem Auftrag auszuhärten und die energiereiche Strahlung und/oder der Materialauftragsvorrichtung über die n+1-te Materialschicht nach Führungsdaten zu führen, welche aus den geometrischen Daten einer y+1-ten Querschnittsfläche des zweiten Produkts ermittelt wurden, um Teile der n+1-ten Materialschicht mittels Einwirken der energiereichen Strahlung bzw. selektivem Auftrag auszuhärten wobei x ungleich y ist.

Die Vorrichtung arbeitet vorzugsweise nach einem Verfahren mit den Schritten: Bereitstellen einer Substratplatte welche in ein erstes Substratplattensegment und zumindest ein weiteres Substratplattensegment unterteilt ist, die lösbar miteinander oder mit einem Grundträger verbunden sind, Herstellen eines ersten Produkts auf dem ersten Substratplattensegment durch aufeinanderfolgendes Auftragen von Materialschichten auf das erste Substratplattensegment und selektives Aushärten von vorbestimmten Bereichen jeder aufgetragenen Materialschicht nach deren Auftrag, Herstellen von zumindest einem weiteren Produkt auf dem zumindest einen weiteren Substratplattensegment durch aufeinanderfolgendes Auftragen von Materialschichten auf das weitere Substratplattensegment und selektives Aushärten von vorbestimmten Bereichen jeder aufgetragenen Materialschicht nach deren Auftrag.

Dabei kann insbesondere vorgesehen sein, dass das Verfahren mit folgenden Schritten abläuft: Herstellen eines oder mehrerer Produkte auf oder an der Oberfläche einer Substratplatte mittels selektiven Aushärtens, insbesondere mittels selektiven Sinterns oder Schmelzens, bei dem das Material in aufeinanderfolgenden Schichten aufgetragen wird, nach jedem Schichtauftrag ein oder mehrere vorbestimmte Bereiche selektiv ausgehärtet und mit einem oder mehreren Bereichen der benachbarten, insbesondere der darunterliegenden Schicht verbunden werden, wobei die vorbestimmten Bereiche anhand einer Querschnittsgeometrie des Produkts in der jeweiligen Schicht vorbestimmt werden, selektives Auftragen des Materials in die vorbestimmten Bereiche der Schicht, und Bereitstellen einer Substratplatte welche in ein erstes Substratplattensegment und zumindest ein weiteres Substratplattensegment unterteilt ist, die lösbar miteinander oder mit einem Grundträger verbunden sind, Herstellen eines ersten Produkts auf bzw. an dem ersten Substratplattensegment durch aufeinanderfolgendes selektives Auftragen von vorbestimmten Bereichen von Materialschichten auf das erste Substratplattensegment und selektives Aushärten dieser vorbestimmten Bereiche jeder aufgetragenen Materialschicht nach deren Auftrag und gfs. Herstellen von zumindest einem weiteren Produkt auf bzw. an dem zumindest einen weiteren Substratplattensegment durch aufeinanderfolgendes selektives Auftragen von vorbestimmten Bereichen von Materialschichten auf das weitere Substratplattensegment und selektives Aushärten der vorbestimmten Bereiche jeder aufgetragenen Materialschicht nach deren Auftrag. Bei dieser Ausgestaltung erfolgt die selektive Aushärtung nach dem Auftrag und wird auf vorbestimmte Bereiche begrenzt, indem ein selektiver Auftrag durchgeführt wird.

Das Verfahren zeichnet sich dadurch aus, dass eine Substratplatte bereitgestellt wird, auf welcher ein erstes und ein weiteres Produkt in einem ersten und einem entsprechend weiteren Substratplattensegment gleichzeitig generativ hergestellt werden können und diese Substratplattensegmente lösbar miteinander oder mit einem Grundträger verbunden sind. Hierdurch wird es ermöglicht, ein einzelnes Substratplattensegment nach Fertigstellung des darauf aufgebauten Produkts zu entnehmen, um das Produkt von dem Substratplattensegment ablösen zu können, während ein weiteres Produkt auf einem anderen Substratplattensegment weiterhin generativ hergestellt wird.

Insbesondere können bei dem Verfahren die Materialschichten auf die zumindest zwei Substratplattensegmente so aufgetragen werden, dass zumindest eine der Materialschichten sich über beide Substratplattensegmente erstreckt. In diesem Fall kann das Verfahren so ablaufen, dass zunächst jeweils eine Materialschicht auf die zumindest zwei Substratplattensegmente aufgetragen wird und diese Materialschicht im Bereich oberhalb beider Substratplattensegmente selektiv ausgehärtet wird.

Die Substratplattensegmente können insbesondere solcherart mit einer einzigen Beschichtungsvorrichtung zusammenwirken, dass auf einem Substratplattensegment ein Produkt in einem ersten Fertigungsstadium aufgebaut wird, beispielsweise mit einer n-ten Schicht oberhalb der Substratplatte und auf einem anderen Substratplattensegment ein anderes Produkt in einem anderen Fertigungsstadium aufgebaut wird, beispielsweise mit einer m-ten aufgebauten Schicht oberhalb der Substratplatte, wobei m ungleich n ist und die n-te und m-te Schicht in einem Arbeitsgang durch die Beschichtungsvorrichtung aufgetragen werden.

Mit dem Verfahren können somit mit zeitlich gestaffelten Fertigungsstartzeitpunkten mehrere Produkte auf einer Substratplatte hergestellt werden, wobei die Produkte teilweise gleichzeitig hergestellt werden und auch zeitversetzt von der Substratplatte abgelöst werden. Auf diese Weise wird es möglich, die Substratplatte mit dem Ziel einer hohen Produktivität mit mehreren Produkten auszulasten, gleichzeitig aber zu vermeiden, dass der Fertigungsstartzeitpunkt erst nach Fertigstellung aller Fertigungsdaten für alle auf der Substratplatte herzustellenden Produkte liegen kann. Stattdessen kann der Fertigungsstartzeitpunkt für jedes Substratplattensegment individuell bestimmt werden und entsprechend auch ein individueller Fertigungsendzeitpunkt für jedes Substratplattensegment erzielt werden. Auf diese Weise wird die Dauer der Fertigung eines individuellen Produkts entscheidend herabgesetzt.

Grundsätzlich ist zu verstehen, dass die Substratplatte in zwei, drei oder mehrere Substratplattensegmente unterteilt sein kann. Dabei ist diese Unterteilung insbesondere als tatsächliche physikalische Unterteilung in einzelne Bauelemente zu verstehen, welche zu einer Substratplatte entsprechend zusammengesetzt werden können. Grundsätzlich können auf alle Substratplattensegmente mit einer einzigen, gemeinsamen Schichtauftragsvorrichtung Schichten aufgetragen werden, was aufgrund der damit verbundenen effizienten Fertigung bevorzugt ist. In bestimmten Anwendungen kann es aber vorteilhaft sein, die Substratplattensegmente mittels separater Schichtauftragsvorrichtungen mit Material zu beschichten, wobei auch hier zu verstehen ist, dass beim Verfahren zwar ein zeitversetzter Fertigungsbeginn und ein entsprechend zeitversetztes Fertigungsende der Produkte auf den verschiedenen Substratplattensegmenten erfolgt, aber auf mehreren Substratplattensegmenten eine simultane Fertigung vorzugsweise mit einem auf allen Substratplattensegmenten simultanen Schichtauftrag und nachfolgender selektiver Aushärtung bestimmter Bereiche zur generativen Herstellung von Produkten zwecks hoher Produktivität stattfindet.

Gemäß einer ersten bevorzugten Ausführungsform ist vorgesehen, dass der eine oder die mehreren vorbestimmten Bereiche mittels einer energiereichen Strahlung selektiv ausgehärtet und mit einem oder mehreren Bereichen der darunterliegenden Schicht verbunden werden. Diese Aushärtungswirkung kann zusätzlich zu einem anderen Aushärtungseffekt bereitgestellt werden oder kann als alleiniger Aushärtungsmechanismus wirken. Grundsätzlich ist unter einer Aushärtung mittels einer energiereichen Strahlung ein Vorgang zu verstehen, bei dem ein zuvor flüssiges Material durch die Strahlungseinwirkung aushärtet, beispielsweise durch eine Photopolymerisation, oder bei dem ein zuvor als fließfähiges Pulver, Granulat oder dergleichen vorliegendes Material durch die Strahlungseinwirkung erhitzt und hierdurch teilweise oder vollständig aufgeschmolzen und dann durch Abkühlen verfestigt oder gesintert wird. Insbesondere geht diese Aushärtung mit einer Verbindung des Materialbereichs, welcher der Strahlungseinwirkung ausgesetzt ist mit einem benachbarten oder darunterliegenden Materialbereich einher, um so das Produkt als integrales Bauteil aufzubauen.

Weiterhin ist es bevorzugt, dass die Substratplattensegmente so nebeneinander bereitgestellt werden, dass zwischen den Substratplattensegmenten kein Material hindurchtreten kann. Insbesondere kann zu diesem Zweck eine entsprechende Abdichtung zwischen den einzelnen Substratplattensegmenten vorgesehen sein oder die Substratplattensegmente in solcher Weise passend aneinandergefügt sein, dass ein Materialdurchtritt zwischen den Substratplattensegmenten nicht möglich ist.

Erfindungsgemäß ist vorgesehen, dass die Substratplattensegmente als Segmente einer Endlosfördervorrichtung ausgebildet sind. Diese Ausgestaltung ermöglicht in besonders effizienter Weise eine kontinuierliche generative Herstellung von Produkten. Die Substratplattensegmente können beispielsweise an einem Endlosförderband befestigt sein oder solcherart miteinander verbunden sein, dass sie in Gestalt einer Gliederkette ein solches Endlosförderband bilden. In diesem Fall können die Substratplattensegmente in aufeinander folgender Weise entlang eines Obertrums und eines Untertrums bewegt werden, wobei während der Bewegung entlang des Obertrums der Schichtauftrag und die selektive Schichtaushärtung erfolgt. Die Entfernung von nicht ausgehärtetem, aufgetragenem Material aus dem Zwischenraum zwischen den hergestellten Produkten und die Entnahme der Produkte kann ebenfalls im Bereich des Obertrums erfolgen, beispielsweise durch entsprechende Absaugeinrichtungen bzw. mechanische Trennvorrichtungen. Es ist aber in gleicher Weise auch möglich, die Entfernung nicht ausgehärteten Materials im Bereich des Untertrums oder bei Übergang vom Obertrum in den Untertrum erfolgen zu lassen, beispielsweise schwerkraftbedingt und die fertig gestellten Produkte dann entweder mitsamt eines Substratplattensegments oder unmittelbar vom Substratplattensegment im Bereich des Untertrums abzunehmen.

Weiterhin ist es bevorzugt vorgesehen, dass die Substratplattensegmente solcherart ausgebildet und angeordnet werden, dass das erste Produkt oder eine Gruppe von ersten Produkten auf einem einzigen Substratplattensegment aufgebaut wird und das weitere Produkt oder eine Gruppe von weiteren Produkten auf einem oder mehreren weiteren Substratplattensegmenten aufgebaut wird. Bei dieser Ausgestaltung können einerseits ein oder mehrere Produkte auf einem einzigen Substratplattensegment hergestellt werden, um auf diese Weise mit hoher Produktivität kleine Produkte in einer sehr schnellen Fertigungszeit herzustellen. Andererseits ist es auch möglich, ein einziges Produkt auf mehreren Substratplattensegmenten herzustellen. Dies kann insbesondere dann vorteilhaft sein, wenn größere Produkte mit dem Verfahren hergestellt werden sollen, also solche Produkte, deren Längsstreckung oder Auflagefläche größer als die Oberfläche eines Substratplattensegments ist. Noch weiter ist vorgesehen, dass eine Gruppe von mehreren Produkten auf zwei oder mehr Substratplattensegmenten hergestellt werden kann. Dies kann insbesondere bei Produkten erforderlich sein, die sich in nur einer bestimmten Richtung sehr weit erstrecken. So kann mit dem Verfahren ein Produkt hergestellt werden, dessen Länge über mehrere Substratbettensegmente reicht. Wenn mehrere solcher Produkte hergestellt werden sollen, so kann gemäß dieser Fortbildungsform eine Gruppe, von solchen Produkten gebildet werden und diese Gruppe über mehrere Substratplattensegmente erstreckt, dann hergestellt werden.

Noch weiter ist es bevorzugt, dass das Material in einem ersten Fertigungsabschnitt in einem quasi-kontinuierlichen Verfahren auf die Substratplatte aufgetragen und selektiv vorbestimmte Bereiche einer jeweils aufgetragenen Schicht ausgehärtet werden und in einem zweiten Fertigungsabschnitt fertig ausgehärtete Produkte quasi-kontinuierlich entnommen werden. Diese Fertigungsweise ermöglicht eine qualitativ hochwertige generative Herstellung in einem ersten Fertigungsabschnitt und zugleich eine diese generative Fertigung nicht negativ beeinflussende Entnahme von fertig gestellten Produkten in einem zweiten Fertigungsabschnitt, der von dem ersten Fertigungsabschnitt beabstandet ist. Dies kann insbesondere erreicht werden, in dem die Substratplattensegmente an einem Endlosförderband an dem angeordnet sind oder ein solches durch die Substratplattensegmente gebildet wird und die Substratplattensegmente entsprechend von dem ersten in den zweiten Fertigungsabschnitt gefördert werden. Insbesondere kann bei dieser Ausgestaltung der erste Fertigungsabschnitt in einer abgeschlossenen kontrollierten, insbesondere, inerten Atmosphäre gehalten werden, um die für eine generative Fertigung nach bestimmten Verfahren erforderlichen Randbedingungen einstellen zu können, wohingegen im zweiten Fertigungsabschnitt die Produkte ausgeschleust werden, bzw. der zweite Fertigungsabschnitt eine Schleuse beinhaltet oder die Produkte bereits beim Übergang vom ersten in den zweiten Fertigungsabschnitt aus der kontrollierten Atmosphäre ausgeschleust werden.

Weiterhin ist bevorzugt vorgesehen, dass in einem ersten Verfahrensschritt eine Materialschicht oberhalb von zumindest zwei, vorzugsweise mehreren Substratplattensegmenten aufgetragen wird, in einem zweiten Verfahrensschritt die Materialschicht selektiv ausgehärtet wird, und dass der maximale Abstand zwischen dem ersten Substratplattensegment und einer zur Herstellung des ersten Produkts darauf aufgetragenen Schicht in zumindest einem, vorzugsweise mehreren, insbesondere allen Verfahrensstadien sich von dem maximalen Abstand zwischen dem weiteren Substratplattensegment und einer zur Herstellung des weiteren Produkts darauf aufgetragenen Schicht unterscheidet. Bei dieser Ausbildungsform ist zu verstehen, dass ein Verfahrensstadium die Sequenz von Schichtauftrag und selektiver Aushärtung umfasst und folglich wiederholt durchgeführt wird, wodurch aufeinanderfolgende Verfahrensstadien entstehen in einem jeweiligen Verfahrensstadium jeweils ein erster und zweiter Verfahrensschritt aufeinanderfolgend ausgeführt wird und hierbei auf jeweils zumindest zwei, insbesondere mehrere oder alle Substratplattensegmente eine Materialschicht in einem Arbeitsgang aufgetragen wird und diese nachfolgend selektiv ausgehärtet wird, um mehrere Produkte auf den entsprechend mehreren Substratplattensegmenten generativ herzustellen. Dabei wird die Schicht auf die Substratplattensegmente solcherart aufgetragen, dass der Abstand zwischen der aufgetragenen Schicht zu den Substratplattensegmenten unterschiedlich für zumindest zwei, insbesondere für jedes Substratplattensegment ist. Dabei ist zu verstehen, dass dieser maximale Abstand während des Schichtauftrags, und auch oder nur während derselektiven Aushärtung unterschiedlich ist. Dieser Abstand kann sich in nur einem von mehreren aufeinanderfolgenden Verfahrensstadien unterscheiden, die jeweils aus der Abfolge eines Schichtauftrags und der selektiven Aushärtung dieser Schicht bestehen, insbesondere aber kann der Abstand in allen Verfahrensstadien sich unterscheiden, d.h. typischerweise, dass die Summe der aufgetragenen Schichten oberhalb eines Substratplattensegments verschieden ist von der Summe der aufgetragenen Schichten oberhalb eines anderen Substratplattensegments, beispielsweise weil mit dem gemeinsamen Auftrag auf die beiden Substratplattensegmente erst zu einem Zeitpunkt begonnen wurde, wo auf einem der beiden Substratplattensegmente bereits eine oder mehrere Schichten aufgetragen waren. Das Verfahren kann beispielsweise auf solche Weise umgesetzt werden, dass die Substratplattensegmente individuell hinsichtlich ihrer Höhe verfahren werden können, um auf diese Weise zu erreichen, dass zwar eine Schicht auf alle Substratplattensegmente in einer gemeinsamen Ebene aufgetragen wird, gleichwohl aber der Abstand dieser Schicht zu den Substratplattensegmenten unterschiedlich für jedes Substratplattensegment ist, oder indem die Schichtauftragsvorrichtung während des Auftragsvorgangs zwischen den Substratplattensegmenten vertikal verstellt wird.

Noch weiter ist es bevorzugt, das Verfahren fortzubilden durch die Schritte Entfernen von auf dem ersten Substratplattensegment angeordnetem Material, welches nicht ausgehärtet wurde, ohne hierbei Material eines weiteren Substratplattensegments zu entfernen, und darauffolgendes Entfernen von dem auf dem weiteren Substratplattensegment angeordnetem Material, welches nicht ausgehärtet wurde. Für die, quasi-kontinuierliche generative Fertigung ist es an der Entnahmestelle besonders vorteilhaft, wenn das Entfernen des nicht ausgehärteten Materials in solcher Weise erfolgen kann, dass ein benachbarter Bereich hierdurch nicht beeinflusst wird und das nicht ausgehärtete Material in diesem benachbarten Bereich stehen bleibt. Während der generativen Fertigung hat das nicht ausgehärtete Material eine Stützfunktion und dient dazu, darüber liegende Schichten aufzunehmen und zu tragen. Das nicht ausgehärtete Material darf daher in der Regel nicht entfernt werden, bevor das Produkt nicht vollständig aufgebaut und ausgehärtet worden ist. Um nun aber unter einer solchen Vorgabe die Notwendigkeit zu verhindern, dass fertig gestellte Produkte zunächst eine längere, der Prozesssicherheit dienende Strecke zurücklegen müssen, bis sie zu der Entnahmestelle gelangen, an dem das nicht ausgehärtete Material entfernt wird, ist es vorteilhaft, wenn die Materialentfernungsvorrichtung die Materialentfernung bewerkstelligen kann, ohne das unmittelbar benachbarte Substratplattensegment hierbei zu beeinflussen. Dies ermöglicht die schnelle und quasi-kontinuierliche Fertigung und vermeidet die Bereitstellung eines Sicherheitsabstandes zwischen Schichtauftragsvorrichtung und Materialentfernungsvorrichtung.

Weiterhin ist es bevorzugt, dass in einer ersten Phase des Herstellungsvorgangs nur Schichtbereiche einer Schicht selektiv ausgehärtet werden, welche zur Herstellung des ersten Produktes dienen und in einer letzten Phase des Herstellungsvorgangs nur Schichtbereiche einer Schicht selektiv ausgehärtet werden, welche zur Herstellung des weiteren Produktes dienen und vorzugsweise in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen. Mit der so erreichten, quasi-kontinuierlichen und simultanen Fertigung von Produkten in unterschiedlichen Fertigstellungsstadien wird ein produktives und schnelles Verfahren zur individuellen Herstellung von kleinen Produkten mittels eines generativen Fertigungsverfahrens erzielt.

Gemäß einer weiteren bevorzugten Ausführungsform ist vorgesehen, dass zwischen den Substratplattensegmenten eine Trennwand bereitgestellt wird, welche den oberhalb jedes Substratplattensegments bestehenden Bauraum von dem oberhalb eines benachbarten Substratplattensegments bestehenden Bauraum abtrennt. Eine solche Trennwand ermöglicht oder vereinfacht die Entfernung von nicht ausgehärtetem Material oberhalb von einem Substratplattensegment, ohne hierbei das nicht ausgehärtete Material in einem hierzu benachbarten Substratplattensegment zu beeinflussen. Dabei ist zu verstehen, dass eine solche Trennwand als Bestandteil der Fertigungsvorrichtung bereitgestellt werden kann und in diesem Fall beispielsweise so ausgeführt werden kann, dass sie simultan zum Schichtauftrag nachgeführt wird, um jeweils eine exakte Höhe oder etwas weniger als diese exakte Höhe aufzuweisen, die der oberen Schichtfläche des Materialauftrags im Bereich zwischen zwei Substratplattensegmenten entspricht.

Dabei kann insbesondere vorgesehen sein, dass die Trennwand durch Aushärten des aufgetragenen Materials während des Herstellungsvorgangs des Produkts hergestellt wird. Mit dieser Fortbildungsform wird jeweils am Rand eines Substratplattensegments während des Fertigungsvorgangs aus dem aufgetragenen Material eine solche Trennwand hergestellt. Diese Vorgehensweise hat den Vorteil, dass auf konstruktiv aufwändige Trennwandnachführungen verzichtet werden kann. Stattdessen wird entlang des Randbereichs eines Substratplattensegments eine entsprechende Trennwand aufgebaut, die entsprechend bei jedem Schichtauftrag höher wächst und auf diese Weise zur Gesamthöhe des Materialschichtbettes nachgeführt wird. Die Trennwand kann dann bei Entfernen der Produkte von dem Substratplattensegment oder im Zuge der Entfernung von nicht ausgehärtetem Material von dem benachbarten Substratplattensegment entfernt werden.

Die beiden vorgenannten Ausführungsformen können weiter fortgebildet werden, indem die Trennwand zwischen zwei Substratplattensegmenten mit zumindest einem der beiden Substratplattensegmenten verbunden ist. Durch Verbindung der Trennwand mit beiden Substratplattensegmenten, welche sie voneinander abtrennt, kann zugleich auch eine sichere Abdichtung gegen Materialdurchtritt zwischen den Substratplattensegmenten erreicht werden. Die Verbindung kann hierbei durch generativen Aufbau der Trennwand auf einem oder beiden Substratplattensegmenten oder durch entsprechend konstruktive Verbindung eines zur Vorrichtung gehörenden Trennwandbauteils erzielt werden.

Gemäß einer weiteren bevorzugten Ausführungsform ist vorgesehen, dass jedes Substratplattensegment individuell in Bezug auf die Schichtauftragsvorrichtung solcherart verfahren wird, dass der Abstand senkrecht zur Oberfläche der Substratplatte und der mit einer Schichtauftragsvorrichtung aufgetragenen Schicht verändert wird und die resultierende Höhe des Materialbetts auf einem Substratplattensegment verschieden von der Höhe des Materialbetts auf einem anderen Substratplattensegment ist. Gemäß dieser Ausführungsform kann jedes Substratplattensegment beispielsweise mittels eines Aktuators, der wechselweise auf die Substratplattensegmente einwirkt oder mittels mehrerer Aktuatoren, von denen jeder für jeweils ein Substratplattensegment bereitgestellt ist, individuell in seiner Höhe verfahren werden. Hierdurch wird erreicht, dass die Substratplattensegmente auf unterschiedlichen Höhen platziert werden können, um dann nachfolgend eine Materialschicht in eine Ebene oberhalb der Substratplattensegmente aufzutragen. Diese Materialschicht liegt dann in individuell verschiedenem Abstand zu den jeweiligen Substratplattensegmenten, d.h. insbesondere in individuellem Abstand zu der Ebene der Oberfläche der Substratplattensegmente, auf welche die erste Materialschicht auf das jeweilige Substratplattensegment aufgetragen worden ist. Die Ausführungsform eignet sich, um ein Produkt in einem ersten Verfahrensstadium auf einem ersten Substratplattensegment und ein anderes Produkt in einem anderen Fertigungsstadium auf einem anderen Substratplattensegment bei gemeinsamem Schichtauftrag auf die beiden Substratplattensegmente generativ herzustellen und kann auf entsprechend mehrere Substratplattensegmente mit entsprechend mehreren Produkten in unterschiedlichen Verfahrensstadien angewendet werden.

Weiter ist es bevorzugt, dass vor jedem Materialauftrag die ausgehärteten Bereiche der zuvor aufgetragenen Schicht oberflächlich beschliffen werden. Durch eine solche Oberflächenbearbeitung, die insbesondere als Beschleifung, aber auch durch andere spanende Fertigungsverfahren mit geometrisch definierter oder geometrisch undefinierter Schneide erfolgen kann, wird die geometrische Präzision des generativen Fertigungsverfahrens weiter erhöht. Insbesondere wird durch eine solche spanende Bearbeitung eine definierte Auflagefläche und Verbindungsstelle für die darüber liegende Schicht und die darin auszuhärtenden Bereiche bereitgestellt. Zudem wird durch die spanende Bearbeitung eine definierte Schichtdicke eingestellt, was für ein reproduzierbares geometrisches Fertigungsergebnis vorteilhaft ist.

Noch weiter ist es bevorzugt, dass zur Aushärtung des ersten und des zumindest einen weiteren Produkts, insbesondere aller weiteren Produkte eine einzige Strahlungsquelle, insbesondere ein einziger Strahlengang einer einzigen Strahlungsquelle oder eine einzige Materialauftragsvorrichtung genutzt wird. Grundsätzlich ist zu verstehen, dass zur Beschleunigung des Fertigungsvorgangs auch auf mehrere Strahlenquellen oder mehrere Strahlengänge einer einzigen Strahlenquelle zurückgegriffen werden kann. Das Herstellungsverfahren zeichnet sich aber insbesondere dadurch aus, dass es zwar mehrere Produkte gleichzeitig herstellt und diese Produkte in unterschiedlichen Fertigungsstadien sind, d.h. insbesondere aus einer unterschiedlichen Anzahl von Schichten aufgebaut sind. Besonders ist hierbei aber, dass sowohl der Auftrag einer Schicht durch eine einzige Schichtauftragsvorrichtung für alle Substratplattensegmente und darauf aufgebauten, zu fertigenden Produkte erfolgen kann und dass darüber hinaus auch die Aushärtung der bestimmten Bereiche einer Schicht für alle zu fertigenden Produkte durch eine einzige Strahlungsquelle erfolgen kann.

Gemäß einer weiteren bevorzugten Ausführungsform ist vorgesehen, dass jedes Substratplattensegment während des Herstellungsvorgangs mittels einer Hubvorrichtung in einer vertikalen Richtung angehoben und abgesenkt wird und die Hebe- und Senkbewegung der Substratplattensegmente unabhängig voneinander ist. Die unabhängige Hebe- und Senkbewegung kann insbesondere durch jeweils einen auf mehrere Substratplattensegmente einwirkenden Aktuator bewirkt werden oder durch jeweils einen Aktuator, der jeweils einem Substratplattensegment zugeordnet ist.

Noch weiter ist es bevorzugt, dass mehrere Substratplattensegmente in einem Arbeitsgang mit einer einzigen Materialauftragsvorrichtung mit Material beschichtet werden. Diese Fortbildung ermöglicht eine effizient arbeitende Schichtauftragsvorrichtung bei zugleich individuellem Fertigungsfortschritt der jeweiligen Produkte, die auf den jeweils mehreren Substratplattensegmenten hergestellt werden.

Schließlich kann das Verfahren durch die Schritte fortgebildet werden: selektives Aufbringen einer Materialschicht oder Aufbringen einer n-ten Materialschicht auf eine Substratträgerplatte und selektives Aushärten von Teilen der Materialschicht mittels Einwirken einer energiereichen Strahlung, insbesondere einer Laserstrahlung, auf diese Teile der Materialschicht, Führen der energiereichen Strahlung bzw. einer selektiven Materialauftragsvorrichtung über die n-te Materialschicht nach Führungsdaten, welche aus den geometrischen Daten einer x-ten Querschnittsfläche eines ersten Produkts ermittelt wurden, selektives Aufbringen einer Materialschicht oder Aufbringen einer n+1-ten Materialschicht auf die n-te Materialschicht, Führen der energiereichen Strahlung bzw. einer selektiven Materialauftragsvorrichtung über die n+1-te Materialschicht nach Führungsdaten, welche aus den geometrischen Daten einer x+1-ten Querschnittsfläche des ersten Produkts ermittelt wurden, Führen der energiereichen Strahlung bzw. einer selektiven Materialauftragsvorrichtung über die n-te Materialschicht nach Führungsdaten, welche aus den geometrischen Daten einer y-ten Querschnittsfläche eines zweiten Produkts ermittelt wurden, und Führen der energiereichen Strahlung bzw. einer selektiven Materialauftragsvorrichtung über die n+1-te Materialschicht nach Führungsdaten, welche aus den geometrischen Daten einer y+1-ten Querschnittsfläche des zweiten Produkts ermittelt wurden wobei, x ungleich y ist. Bei dieser Fortbildungsform werden zumindest zwei Produkte hergestellt, indem sie in einem gemeinsamen Schichtauftrag in zwei unterschiedlichen Schichtbereichen ein und derselben Schicht einer selektiven Aushärtung unterzogen werden, wobei in dieser Schicht in den Produkten selbst unterschiedliche Höhen gegenüber der Substratplatte dargestellt sind.

Die Vorrichtung und das Verfahren gemäß der in dieser Beschreibung erläuterten Aspekte eignen sich in vorteilhafter Weise für verschiedene Verwendungen. So können einerseits mit der Vorrichtung/dem Verfahren personalisierte Produkte für eine Verbraucher-Anwendung hergestellt werden, beispielsweise können die Vorrichtung/das Verfahren mit einer Steuerung ausgeliefert werden, die das persönliche Erstellen von Figuren, Spielelementen und dergleichen ermöglicht. In entsprechender Weise kann das Verfahren/die Vorrichtung auch dazu verwendet werden, um individualisierten Schmuck herzustellen.

Eine weitere beispielhafte Anwendung für die Vorrichtung/das Verfahren liegt in der Herstellung von Platinen für gedruckte Schaltungen, insbesondere in einer Verwendungsweise, bei der neben dem Platinenträger auch darauf angeordnete Leiterbahnen hergestellt werden und dies durch entsprechende generative Fertigung mit den hierfür erforderlichen, unterschiedlichen Materialien erreicht wird. In diesem Zusammenhang ist insbesondere zu verstehen, dass mit der Vorrichtung und den Verfahren auch zwei unterschiedliche Werkstoffe bzw. Materialien simultan oder zeitversetzt verarbeitet werden können, um ein Produkt herzustellen, welches aus zwei oder mehr unterschiedlichen Materialien aufgebaut ist. Zu diesem Zweck wird der Gedanke dahingehend weiterentwickelt, dass ein erstes aushärtbares Material zum Schichtaufbau in einem ersten Prozessschritt genutzt wird und ein zweites, vom ersten verschiedenes, aushärtbares Material zum Schichtaufbau in der gleichen oder einer nachfolgenden Schicht in einem zweiten Prozessschritt benutzt wird. Dabei ist zu verstehen, dass sich auf diese Verwendungsweise die zuvor erläuterten Ausführungen einer Vorrichtung/eines Verfahrens mit der Möglichkeit eines Auftrags eines aushärtbaren Materials und eines Farbauftrags auch in ihrer Ausgestaltung und in ihren Fortbildungen auf eine Ausführung mit der Möglichkeit eines Auftrags eines zweiten aushärtbaren Materials anstelle oder zusätzlich zu einer Farbe entsprechend anwenden lässt.

Weitere Anwendungsmöglichkeiten für die Vorrichtungen/Verfahren liegen in der Herstellung von individuell geformten Lebensmitteln in kleinerer oder größerer Serie. Hier eignet sich die Erfindung zur Herstellung von Lebensmitteln aus Fleischprodukten, aus Teigmaterial für Backwaren, aus Gemüse- oder Obstprodukten oder Süßwaren, wie bspw. Schokolade, die sich zur Verarbeitung als aushärtbares Material eignen und dem Benutzer eine kreative, hinsichtlich der Oberflächen/Volumen-Verhältnisse vorteilhafte Ausformung für eine Weiterverarbeitung und Geschmackswirkung eröffnen.

Weitere beispielhafte Anwendungen für die Vorrichtungen und Verfahren liegen in der medizinischen Technik. Hier können die Verfahren/Vorrichtungen zur Herstellung von künstlichen Organen oder Organstrukturen für Nachzüchtungen solcher Organe auf biotechnologischem Weg dienen, in gleicher Weise aber auch für die Herstellung individuell geformter Implantate, Orthesen, Prothesen und dergleichen. Bei dieser Anwendungsweise kommt insbesondere die Möglichkeit der gezielten Herstellung individuell geformter und individuell gefärbter dreidimensionaler Produkte zum tragen, wenn es sich um ästhetisch relevante Bauteile handelt. Soweit liegt ein vorteilhaftes Verwendungsgebiet für die Verfahren und Vorrichtungen auch im Bereich der zahnmedizinischen Technik, insbesondere in der Verwendung der Vorrichtung/Verfahren zur Herstellung von Zahnersatz und dentalen Hilfsteilen, Schablonen zur Durchführung zahnmedizinischer oder kieferorthopädischer Eingriffe. Generell ist die Vorrichtung/das Verfahren vorteilhaft einsetzbar, um damit Lehren, Schablonen, Führungseinrichtungen und dergleichen in individueller Weise solcher Art anzufertigen, dass sie chirurgische Eingriffe im Wege einer operativen Behandlung in sicherer Weise und mit einer höheren Präzision erlauben als vorbekannte Vorgehensweisen mit standardisierten Schablonen/Führungseinrichtungen.

Schließlich liegt eine vorteilhafte Verwendung der Vorrichtung/des Verfahrens in der Herstellung von individuellen Modellen zur Visualisierung von Produkten, baulichen Situationen in maßstabsgetreuer verkleinerter oder vergrößerter Darstellung oder als reelles 1:1 Prototypenmodel, beispielsweise im Bereich der Stadtplanung oder Architektur.

Bezüglich der zuvor und in der nachfolgenden Beschreibung und den Ansprüchen beschriebenen Aspekte und Ausführungsformen ist zu verstehen, dass sich die beschriebenen Ausführungsformen der Vorrichtung und des Verfahrens für Ausführung eines additiven Herstellungsverfahrens mit schrägem Schichtauftrag, die Ausführung eines additiven Herstellungsverfahrens und eines zweidimensionalen Druckverfahrens sowie die Ausführung eines additiven Herstellungsverfahrens auf mehreren Substratplattensegmenten auch miteinander kombinieren lassen, beispielsweise indem ein schräger Schichtauftrag auf mehreren Substratplattensegmenten erfolgt oder indem ein schräger Schichtauftrag oder ein Schichtauftrag auf mehrere Substratplattensegmente in einem ersten Auftragsmodus nach einem additiven Herstellungsverfahren in einer Vorrichtung erfolgt, die alternativ einen zweidimensionalen Druck in einem zweiten Auftragsmodus vorsieht. In ebengleicher Weise lassen sich einzelne oder mehrere Merkmale spezifischer Fortbildungsformen dieser Ausführungsformen miteinander in vorteilhafter Weise kombinieren.

Exemplarische Ausführungsbeispiele der Erfindung:
1. Vorrichtung, vorzugsweise dadurch gekennzeichnet, dass die Steuerungsvorrichtung ausgebildet ist, um die Materialauftragsvorrichtung und/oder die Fördervorrichtung so anzusteuern, dass eine Schicht in einer Dicke zwischen 5 µm und 200 µm aufgetragen wird.
2. Vorrichtung zur Herstellung von Produkten mit individueller Geometrie, vorzugsweise umfassend
   eine Substratplatte
   eine relativ zur Substratplatte verfahrbare Materialauftragsvorrichtung zum Auftragen von Material auf die Substratplatte, vorzugsweise oberhalb der Substratplatte,
   eine Steuerungsvorrichtung, welche signaltechnisch mit der Materialauftragsvorrichtung gekoppelt ist,
   vorzugsweise dadurch gekennzeichnet, dass
   die Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen, und
   die Substratplatte in mehrere Substratplattensegmente unterteilt ist, die lösbar miteinander oder mit einem Grundträger verbunden sind.
3. Vorrichtung nach Beispiel 2, vorzugsweise weiter dadurch gekennzeichnet, dass die Materialauftragsvorrichtung zum simultanen Auftragen einer Materialschicht oberhalb einer Anzahl der mehreren Substratplattensegmente in einem Arbeitsgang ausgebildet ist.
4. Vorrichtung einem der vorhergehenden Beispielen 2 oder 3, vorzugsweise dadurch gekennzeichnet, dass die Vorrichtung fortgebildet ist-nach Beispiel 1.

### IV. Kurze Beschreibung der Figuren

Bevorzugte beispielhafte Ausführungsformen werden anhand der beiliegenden Figuren beschrieben. Es zeigen:
Fig. 1A eine schematische, längsgeschnittene Seitenansicht einer ersten beispielhaften Ausführungsform,
Fig. 1B eine Draufsicht auf die beispielhafte Ausführungsform gemäß Fig. 1A,
Fig. 2 eine schematische, längsgeschnittene Seitenansicht einer zweiten beispielhaften Ausführungsform,
Fig. 3 eine schematische, längsgeschnittene Seitenansicht einer dritten beispielhaften Ausführungsform,
Fig. 4 eine schematische, längsgeschnittene Seitenansicht einer vierten beispielhaften Ausführungsform,
Fig. 5 eine schematische Ansicht einer Fertigungsanordnung gemäß einer fünften beispielhaften Ausführungsform, und.
Fig. 6 eine schematische Ansicht einer Fertigungsanordnung gemäß einer sechsten beispielhaften Ausführungsform,
Fig. 7 eine schematische Ansicht einer Fertigungsanordnung gemäß einer siebten beispielhaften Ausführungsform,
Fig. 8 eine achte beispielhafte Ausführungsform,
Fig. 9 eine schematische, längsgeschnittene Seitenansicht eines Fertigungsabschnitts einer generativen Fertigungsstrecke gemäß einer neunten beispielhaften Ausführungsform,
Fig. 10 eine schematische Prinzipdarstellung einer Fertigungsanordnung gemäß einer zehnten beispielhaften Ausführungsform,
Fig. 11 eine schematische, längsgeschnittene Seitenansicht eines Fertigungsabschnitts mit Endlosförderband,
Fig. 12 eine schematische, längsgeschnittene Seitenansicht eines Fertigungsabschnitts gemäß einer elften beispielhaften Ausführungsform,
Fig. 13 eine schematische Darstellung einer Fertigungsanordnung gemäß einer zwölften beispielhaften Ausführungsform,
Fig. 14 eine schematische Darstellung einer Fertigungsanordnung gemäß einer dreizehnten beispielhaften Ausführungsform,
Fig. 15 eine schematisch geschnittene Ansicht einer ersten Ausführungsform eines erfindungsgemäßen Druckkopfs,
Fig. 16 eine schematisch geschnittene Ansicht einer zweiten Ausführungsform eines erfindungsgemäßen Druckkopfs,
Fig. 17 eine schematisch geschnittene Ansicht einer dritten Ausführungsform eines erfindungsgemäßen Druckkopfs und
Fig. 18 eine schematisch geschnittene Ansicht einer vierten Ausführungsform eines erfindungsgemäßen Druckkopfs.

### V. Ausführliche Beschreibung der beispielhaften Ausführungsformen

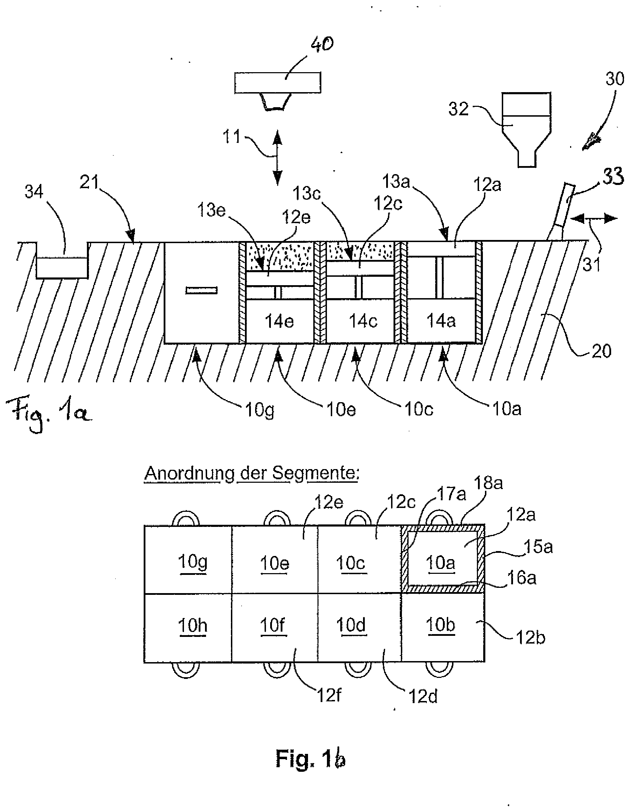

Fig. 1A zeigt eine Aufnahmevorrichtung 20 für insgesamt acht Einschübe 10a-h, die in zwei Reihen und vier Spalten angeordnet sind, wie aus Fig. 1B zu erkennen ist. Jeder Einschub 10a-h weist ein individuell höhenverstellbares Substratplattensegment 12a-f auf. Jedes Substratplattensegment 12a-f ist innerhalb seines Einschubs 10a-f in einer vertikalen Richtung 11 individuell höhenverstellbar. Die vertikale Richtung 11 liegt hierbei für jedes der Substratplattensegmente 12a-f parallel zueinander und senkrecht zur oberen Oberfläche 13a-f der Substratplattensegmente 12a-f, die horizontal, d.h. senkrecht zur Schwerkraftrichtung ausgerichtet ist.

Die Auswertungen innerhalb der Aufnahmevorrichtung 20 sind ausgebildet, um jeweils einen Einschub 10a-f aufzunehmen, in dem ein Substratplattensegment 12a-f angeordnet ist. Es ist aber zu verstehen, dass auch Substratplattensegmente in die Aufnahmevorrichtung 20 eingesetzt werden können, welche eine größere Grundfläche der Substratplatte 12a aufweisen, beispielsweise eine Grundfläche, die doppelt so groß oder viermal so groß ist wie die in Fig. 1a, b dargestellten Substratplattensegmente und die entsprechend zwei bzw. vier Einschubplätze einnehmen.

In den Einschüben 10g und 10h ist ein Füllblock 12g, 12h eingesetzt, der kein Substratplattensegment darstellt und nicht zur Fertigung von Produkten dient.

Jedes Substratplattensegment 12a-f ist mittels jeweils eines Aktuators 14a-f, der beispielsweise ein elektromotorisch betriebener Linearaktuator sein kann, höhenverstellbar. DerAktuator 14a-f ist Bestandteil des Einschubes 10a-f.

Jeder Einschub 10a-f ist von einem nach oben offenen, im Querschnitt rechteckigen, insbesondere quadratischen Gehäuse umgeben, welches vier Wände umfasst, wie beispielhaft am Einschub 10a durch die Wände 15a - 18a abgebildet. Innerhalb dieser Wände bewegt sich das Substratplattensegment 12a und dichtet hierbei an seinem seitlichen Randbereich mit den Wänden solcherart ab, dass Beschichtungsmaterial, welches auf das Substratplattensegment aufgetragen ist, nicht zwischen Substratplattensegment und den Wänden hindurchtreten kann.

Die oberen Endkanten der Wände schließen bündig mit einer Oberfläche 21 der Aufnahmevorrichtung 20 ab, wenn die Einschübe 10a-e in die Aufnahmevorrichtung eingesetzt sind. In gleicher Weise steht eine obere Oberfläche der Einschübe 10g, h fluchtend zu der Oberfläche 21 der Aufnahmevorrichtung 20.

Eine Pulverauftragsvorrichtung 30 ist bereitgestellt, welche einen Pulverförderer 32 umfasst, aus dem Pulver auf die Oberfläche 21 der Aufnahmevorrichtung abgegeben werden kann, und die weiterhin einen Schieber 33 umfasst, der sich entlang einer Bewegungsrichtung 31 reziprokal über die Oberfläche 21 und die Substratplattensegmente 12a-f bzw. Einschübe 10a-h bewegen kann. Der Schieber 33 verteilt hierbei das von dem Pulverförderer 32 abgegebene Pulver und trägt eine Pulverschicht oberhalb der Substratplattensegmente 12a-f auf.

Die Pulverauftragsvorrichtung umfasst weiterhin eine Sammelvorrichtung 34 für überschüssiges Pulver. In die Sammelvorrichtung 34 schiebt der Schieber 33 dasjenige Pulver, welches nicht als Pulverschicht oberhalb der Substratplattensegmente aufgetragen werden konnte.

Wie in Fig. 1A zu erkennen ist, sind die Substratplattensegmente 12a-f mittels ihrer Aktuatoren 14a-f auf unterschiedliche Höhen eingestellt, d.h. der Abstand der oberen Oberfläche 13a-fjedes Substratplattensegments zu der Ebene der Oberfläche 21, entlang welcher sich der Schieber 33 bewegt und als Rakel das Pulver aufträgt, ist unterschiedlich.

Nach jedem Pulverauftragsvorgang, der durch Bewegen des Schiebers 33 aus der in Fig. 1A dargestellten rechten Position in eine von hier aus gesehen linke Position im Bereich der Auffangwanne 34 erfolgt, wird die bei diesem Pulverauftragsvorgang aufgetragenen Schicht oberhalb jedes Substratplattensegments 12a-f mittels einer Strahlungsquelle, hier einem Hochleistungslaser 40 in vorbestimmten Bereichen ausgehärtet. Diese selektive Aushärtung erfolgt anhand von Steuerungsdaten, die den Querschnitt eines Produkts in der jeweils aufgetragenen Schicht entsprechen. Bei diesem selektiven Aushärtungsvorgang werden die ausgehärteten Bereiche zugleich mit entsprechend darunter liegenden Bereichen des Produkts, die zuvor ausgehärtet wurden, verbunden. Der Aushärtungsvorgang kann insbesondere als selektives Lasersintern oder selektives Laserschmelzen erfolgen. Grundsätzlich sind aber auch andere Aushärtungsprinzipien, wie beispielsweise Photopolymerisation, auf das Prinzip der Erfindung anwendbar. Der Strahl des Hochleistungslasers 40 wird hierbei mit Strahllenkungsmitteln solcherart gelenkt, dass er auf die vorbestimmten Bereiche der jeweils zuvor aufgetragenen Schicht trifft und diese Bereiche oberhalb allen zuvor beschichteten Substratplattensegmenten selektiv aushärtet.

Die Strahllenkungsmittel sind hierzu mit einer Steuerungsvorrichtung signaltechnisch gekoppelt. In der Steuerungsvorrichtung sind Fertigungsdaten für zumindest die jeweils gleichzeitig herzustellenden Produkte gespeichert. Die Fertigungsdaten umfassen insbesondere Lagedaten, welche die Lage eines jeweiligen Produkts auf der Substratplatte charakterisieren und Geometriedaten, welche die Geometrie des jeweiligen Produkts charakterisieren. Die Geometriedaten sind solcherart aufbereitet, dass darin die geometrischen Daten einzelner Querschnitte des Produkts enthalten sind. Die jeweilige Lage eines solchen Querschnitts und die für diesen Querschnitt gespeicherten Geometriedaten entspricht der Lage der jeweils aufgetragenen Materialschicht, aus dem dieser Produktquerschnitt hergestellt wird und der Geometrie des Produkts in dieser Materialschicht. In der dargestellten Ausführungsform mit senkrecht auf der Platte aufstehenden Produkten entsprechen die geometrischen Daten daher horizontal verlaufenden Querschnittsebenen durch dieses Produkt.

Nach der Aushärtung der selektierten Bereiche fährt der Schieber 33 aus der linken Position in die in Fig. 1A dargestellte rechte Position zurück. Hierbei werden die selektiv ausgehärteten Bereiche mittels einer Schleifvorrichtung, die am Schieber angeordnet ist, oberflächlich beschliffen, um hierdurch eine definierte Oberfläche für den nachfolgenden Beschichtungs- und Aushärtungsvorgang und eine höhere geometrische Präzision des generativ hergestellten Bauteils zu erzielen.

Nach diesem Vorgang werden die Substratplattensegmente 12a-f um eine vordefinierte Distanz abgesenkt, welche der Schichtstärke der nachfolgend aufgetragenen Schicht entspricht. Durch diesen Absenkungsvorgang liegt die Oberfläche der zuvor aufgetragenen Schicht und der darin selektiv ausgehärteten Bereiche nicht mehr in Flucht mit der Oberfläche 21, entlang welcher sich der Schieber 33 mit einer unteren Rakelkante bewegt, sondern um die Distanz, um welche das Substratplattensegment abgesenkt wurde, unterhalb der Ebene dieser Oberfläche 21. Hierauf folgend wird wiederum eine dosierte Menge Pulver aus dem Pulverförderer 32 auf die Oberfläche 21 abgegeben und durch Bewegen des Schiebers 33 nach links dieses Pulver als Schicht oberhalb jedes abgesenkten Substratplattensegments aufgetragen.

Der Vorgang wird wiederholt, bis innerhalb des solcherart schichtweise aufgetragenen Pulverbettes oberhalb eines Substratplattensegments ein Produkt fertig gestellt ist. Dabei ist, wie aus Fig. 1A zu erkennen ist, der Zeitpunkt der Fertigstellung eines oder mehrerer Produkte oberhalb eines Substratplattensegments in den verschiedenen Einschüben 10a-f unterschiedlich, im dargestellten Beispiel wird das oder die Produkte auf dem Substratplattensegment 12e im Einschub 10e typischerweise vor dem oder den Produkten auf dem Substratplattensegment 12c im Einschub 10c fertig gestellt werden, sofern die darin gefertigten Produkte etwa die gleiche Höhe aufweisen. Der Einschub 10a ist in der maximal angehobenen Position des Substratplattensegments 12a gezeigt, welche dem Fertigungsbeginn entspricht.

Nach Fertigstellung der Produkte auf einem einzelnen Einschub 10a-f kann dieser Einschub aus der Aufnahmevorrichtung 20 entnommen werden und durch einen neuen Einschub ersetzt werden, dessen Substratplatte in der obersten Position ist. Die Produkte im entnommenen Einschub können von der Substratplatte abgelöst werden, nachdem nicht ausgehärtetes Pulvermaterial entfernt worden ist. Auf dem neu eingesetzten Segment können simultan neue Produkte hergestellt werden. Durch den solcherart möglichen, zeitversetzten aber zugleich simultanen Aufbau von Produkten in der Vorrichtung wird eine hohe Produktivität bei der generativen Fertigung von Produkten erzielt.

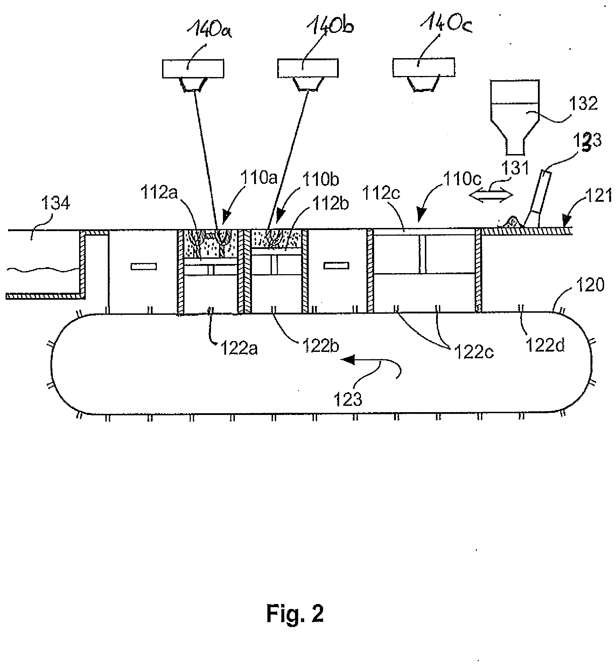

Fig. 2 zeigt eine zweite beispielhafte Ausführungsform, bei der mehrere Substratplattensegmente 112a-c als Module 110a-c auf einem Endlosförderband 120 angekoppelt werden können. An dem Förderband 120 sind mehrere Ankopplungspunkte 122a, b, c, d ... bereitgestellt, welche zugleich als Arretierung für ein Modul 110a-c dienen und die Stromversorgung für einen in dem Modul angeordneten Aktuator 114a-c bereitstellen.

Der Aktuator innerhalb jedes Moduls ist ausgebildet, um die Substratplattensegmente 112a-c jeweils individuell höhenzuverstellen.

Wie in Fig. 2 zu erkennen ist, sind die Substratplattensegmente 112a und 112b als Einzelsegmente ausgeführt, wohingegen das Substratplattensegment 112c als Doppelsegment ausgeführt ist und sich über die doppelte Länge entlang des Förderbandes 120 erstreckt.

Jedes Modul 110a-c ist wiederum, wie die Einschübe gemäß Fig. 1A, B, mit Seitenwänden versehen, innerhalb welcher sich die Substratplattensegmente 112a-c in randseitig abgedichteter Weise vertikal bewegen können. Die randseitigen Wände schließen mit ihren oberen Kanten fluchtend mit einer Oberfläche 121 ab, auf welche wiederum aus einem Pulverförderer 132 Pulver abgegeben werden kann. Die Oberfläche 121 liegt horizontal, d.h. senkrecht zur Schwerkraftrichtung und durch Bewegen eines Schiebers 133 mit einer unteren Rakelkante, welche auf der Oberfläche 121 aufliegt, in einer Richtung 131 wird das aufgetragene Pulver über die Substratplattensegmente 112a-c verteilt und schließlich nach Verfahren des Schiebers aus der in Fig. 2 dargestellten rechten Position in eine hierzu horizontal nach links versetzte linke Position überschüssiges Pulver in einen Auffangbehälter 134 geschoben.

Wiederum wird auch bei der in Fig. 2 dargestellten Ausführungsform durch stufenweises Absenken der Substratplattensegmente 112a-c in jeweils individueller Weise ein unterschiedlich hohes Pulverbett in jedem einzelnen Modul 110a-c eingestellt und hierdurch ein unterschiedlicher Fertigungsfortschritt erreicht, d.h. die in einem Arbeitsgang des Schiebers 133 aufgetragene Schicht weist einen Abstand zu der oberen Oberfläche des Substratplattensegments 112c auf, der unterschiedlich ist zu dem Abstand zur Oberfläche des Substratplattensegments 112b, der wiederum unterschiedlich ist zu der Oberfläche des Substratplattensegments 112a. Auf diese Weise können in den einzelnen Modulen Produkte mit unterschiedlichem Fertigungsfortschritt bzw. in unterschiedlichen Fertigungsstadien generativ erzeugt werden, wie zu ersehen ist aus dem im Modul 110a kurz vor Fertigstellung befindlichen Produkt 160, 161a und dem im Modul 110b etwa zur Hälfte fertig gestellten Produkt 160b.

Für die Funktion der Fertigungsanordnung gemäß Fig. 2 ist es vorgesehen, dass der Fertigungsfortschritt in den Modulen 110a-c ausgehend von rechts in Förderrichtung des Förderbandes 120 nach links, wie dargestellt durch den Pfeil 123, zunimmt. Sobald in einem Fertigungsmodul eine Fertigstellung der Produkte erzielt wurde, wird das Förderband so weit fortbewegt, dass dieses Modul entnommen werden kann oder das Modul wird entnommen und das Förderband um die entsprechende Länge des Moduls fortbewegt. In diesem Fall kann ein neues Modul auf der rechten Seite benachbart zur dargestellten Position des Schiebers 133 eingesetzt werden und eine generative Fertigung in diesem neuen Modul begonnen werden. Das entnommene Modul kann in einem weiteren Fertigungsabschnitt weiterverarbeitet werden, insbesondere kann hieraus das nicht ausgehärtete Pulvermaterial entnommen werden und die darin gefertigten Produkte von dem Substratplattensegment entfernt werden. Der besondere Vorteil liegt hierbei darin, dass in dem fertig gestellten Substratplattensegment, welches zuvor einer simultanen Fertigung mit den anderen Substratplattensegmenten unterzogen war, nun eine Entfernung des nicht ausgehärteten Pulvers und der fertig gestellten Produkte möglich ist, ohne dass hierzu das Pulver aus anderen Substratplattensegmenten entfernt werden muss oder der Fertigungsprozess in den anderen Substratplattensegmenten angehalten werden muss.

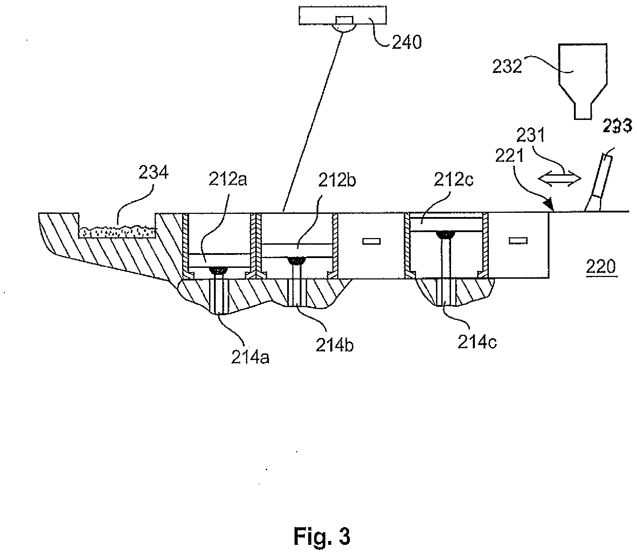

Fig. 3 zeigt eine weitere Ausführungsform. In einer insoweit mit den Ausführungsformen der Figuren 1A, B und 2 übereinstimmenden Weise sind mehrere Substratplattensegmente 212a-c nebeneinander angeordnet und jeweils von Seitenwänden in zu den Randbereichen jedes Substratplattensegments abgedichteter Weise umgeben. Die Seitenwände schließen mit ihren oberen Kanten bündig zu einer Oberfläche 221 ab, entlang derer sich ein Schieber 233 einer Pulverauftragsvorrichtung mit seiner unteren, als Rakelkante dienenden Kante in einer Richtung 231 entlangbewegt. Der Schieber 233 trägt hierbei eine Pulverschicht oberhalb der Substratplattensegmente 212a-c in einem Arbeitshub auf und schiebt überschüssiges Pulver in eine Auffangwanne 234.

Ebenso ist eine Laserstrahlquelle 240 vorgesehen, welche dazu dient, um vorbestimmte Bereiche der aufgetragenen Pulverschicht oberhalb jedes Substratplattensegments selektiv auszuhärten. Eine Steuerung für die Fertigungsvorrichtung ist vorgesehen, welche solcherart ausgebildet ist, dass nach jedem Schichtauftragsvorgang vorbestimmte Bereiche oberhalb jedes Substratplattensegments mittels der Laserstrahlquelle 240 ausgehärtet werden, wie zuvor beschrieben.

Im Unterschied zu den in den Figuren 1A, B und 2 gezeigten Ausführungsformen ist bei der Ausführungsform gemäß Fig. 3 ein jeweiliger Aktuator 214a-c, welcher dazu dient, um die Substratplattensegmente 212a-c individuell höhenzuverstellen und hierdurch den Abstand der oberen Oberfläche des jeweiligen Substratplattensegments von der Ebene, in welcher sich die Rakelkante des Schiebers 133 bewegt, individuell zu verändern, nicht Bestandteil eines Moduls, welches in eine Aufnahmevorrichtung eingesetzt wird. Stattdessen sind diese Aktuatoren 214a-c in die Aufnahmevorrichtung 220 integriert und die Substratplattensegmente 212a-c können mit den Aktuatoren 214a-c lösbar gekoppelt werden.

Mit der in Fig. 3 dargestellten Ausführungsform kann somit in gleicher Weise eine quasi kontinuierliche Fertigung von Produkten mittels eines generativen Herstellungsverfahrens wie SLS (Selective Laser Sintering) oder SLM (Selective Laser Melting) erfolgen, wobei in mehreren Substratplattensegmenten simultan Produkte hergestellt werden, die in einem unterschiedlichen Fertigungsstadium für jedes Substratplattensegment sind. Dies wird erreicht, indem die Substratplattensegmente individuell höhenverstellt werden können und hierdurch erreicht wird, dass oberhalb jedes Substratplattensegments ein Pulverbett aufgetragen wird, dessen Höhe unterschiedlich zwischen benachbarten Substratplattensegmenten ist, obwohl die jeweiligen neuen Schichten des aushärtbaren Materials mittels eines einzigen Schiebers 133 in einem einzigen Arbeitsgang auf die mehreren Substratplattensegmente 212a-c aufgetragen wird.

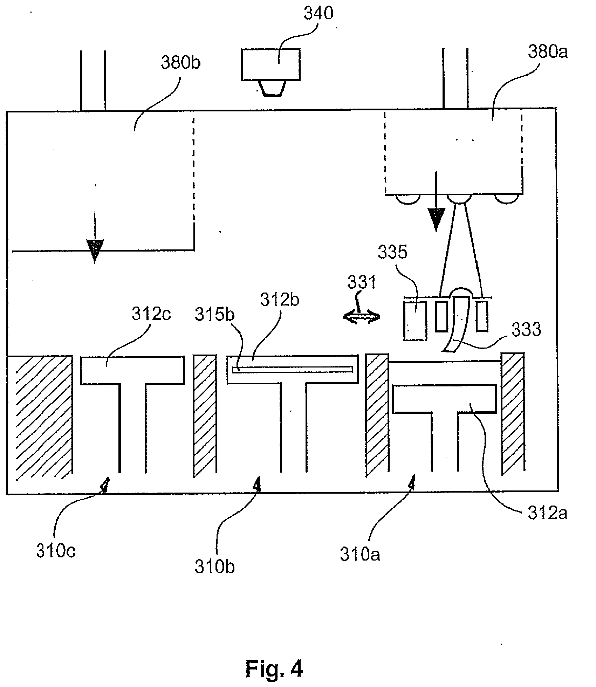

Fig. 4 zeigt eine vierte beispielhafte Ausführungsform, welche sich durch bestimmte Merkmale auszeichnet. Die in Fig. 4 gezeigte Ausführungsform beruht auf dem grundsätzlich ähnlichen Prinzip wie die in den Figuren 1A - 3 gezeigten Ausführungsformen und weist ein Substratplattensegmente 312a auf, das benachbart zu anderen Substratplattensegmenten (nicht dargestellt) angeordnet sein kann und individuell in seiner Höhe verstellt werden kann. Es ist zu verstehen, dass das zur Fig. 4 nachfolgend erläuterte Prinzip auf die in den Figuren 1A - 3 erläuterten Ausführungsformen angewendet werden kann.

Fig. 4 zeigt ein erstes Dosiermodul 310a, welches als Dosierplattform dient und vor Beginn eines Fertigungsprozesses mit Pulver gefüllt wird. Zu diesem Zweck ist eine höhenverstellbare Grundplatte 312a innerhalb des Dosiermoduls in die unterste Position verfahren. Oberhalb des Dosiermoduls 310a ist ein Strahlerfeld 380 angeordnet, welches das in das Dosiermodul 310a eingefüllte Pulver vorheizt.

Ein Rakel 333 ist entlang einer Richtung 331 horizontal verschiebbar. In Bewegungsrichtung vor dem Rakel 333 ist ein Heizband 335 angeordnet, welches das durch das Rakel bewegte Pulver laufend heizt bzw. auf der vorgeheizten Temperatur hält.

Benachbart zu dem Dosiermodul 310a ist das Substratplattensegment 312b in einem Baumodul 310b angeordnet. Das Substratplattensegment 312b ist individuell und unabhängig von der Grundplatte 312a in dem Baumodul 310a vertikal verschieblich.

Das Baumodul 310b liegt in Bezug auf die Bewegungsrichtung 331 des Rakels 333 zwischen dem Dosiermodul 310a und einem Auffangmodul 310c, der dazu dient, überschüssiges Pulver, welches durch das Rakel 333 über das Baumodul 310b hinweggeschoben wurde, aufzunehmen. Auch in dem Auffangmodul 310c ist eine Grundplatte 312c angeordnet, die individuell und unabhängig von der Grundplatte 312a und dem Substratplattensegment 312b vertikal verschoben werden kann.

Grundsätzlich ist zu verstehen, dass die in Fig. 4 gezeigte Ausführungsform anstelle des dargestellten einzelnen Baumoduls 310b mit Substratplattensegment 312b auch mehrere solche Baumodule Substratplattensegmente aufweisen kann. Diese mehreren Baumodule wären nebeneinander in Auftragsrichtung 313 angeordnet und die Mehrzahl der Substratplattensegmente wäre insgesamt zwischen einem in Bezug auf den Verschiebeweg 331 des Rakels 333 an einem Ende angeordneten Dosiermodul 310a und einem am anderen Ende angeordneten Auffangmodul 310c platziert.

Auch oberhalb des Auffangmoduls 310c ist ein Strahlerfeld 380c angeordnet, welches dazu dient, um das in dem Auffangmodul aufgefangene überschüssige Material auf einer gewünschten Temperatur zu halten.

In das Substratplattensegment 312b ist eine Heizung 315b eingebaut, welche das Substratplattensegment und das darauf angeordnete Pulverbett auf einer gewünschten Temperatur hält.

Die in Fig. 4 dargestellte Ausführungsform ist insgesamt dahingehend optimiert, dass ein gewünschter, vorgewärmter Pulverzustand des Pulvers vor dem selektiven Aushärtungsvorgang erreicht wird, indem die Strahlerfelder 380a, b, das Heizband 335 und die Heizung 315b bereitgestellt sind.

Der mit der in Fig. 4 dargestellten Ausführungsform erzielbare Fertigungsprozess besteht in einer Sequenz, in der zunächst das Substratplattensegment 312b um einen bestimmten Betrag, welcher der aufzutragenden Schichtdicke entspricht, abgesenkt wird und die Plattform 312a des Dosiermoduls 315a um einen bestimmten Betrag angehoben wird, welcher sich aus dem Querschnitt der Plattform und dem für den nachfolgenden Auftragsvorgang erforderlichen Pulvervolumen berechnet.

Hierauf folgend wird das vorgewärmte Pulvervolumen aus dem Bereich des Dosiermoduls durch horizontale Bewegung des Rakels 333 über das Substratplattensegment 312b geschoben und hierbei eine Schicht auf das Substratplattensegment 312b oder gegebenenfalls weitere Substratplattensegmente aufgetragen. Überschüssiges Pulverwird in das Auffangmodul eingebracht.

Nach Auftrag dieser Pulverschicht wird mittels eines Lasers 340 die Pulverschicht in vorbestimmten Bereichen selektiv ausgehärtet und die dabei ausgehärteten Bereiche mit zuvor ausgehärteten Bereichen in der darunter liegenden Schicht verbunden.

Das Rakel 333 fährt hierauf folgend zurück, wobei mittels einer Schleifeinrichtung, die in der nun erfolgenden Bewegungsrichtung von links nach rechts vor dem Rakel angeordnet ist, die zuvor ausgehärteten Bereiche oberflächlich angeschliffen werden, um hierdurch die Geometrietreue des generativ hergestellten Produkts zu verbessern und die Anbindung der darauf folgenden auszuhärtenden Bereiche zu erhöhen. Alternativ zu dieser Ausgestaltung, bei welcher der Schleifvorgang in einem Rückhubvorgang der Beschichtungsvorrichtung ausgeführt wird, ist es möglich, den Schleifvorgang gemeinsam mit dem Fertigungsschritt des erneuten Pulverauftrags auszuführen, In diesem Fall ist die Anordnung der Schleifeinrichtung an der Beschichtungsvorrichtung konstruktiv so zu wählen, dass die Schleifeinrichtung in Bewegungsrichtung des Pulverauftrags vor der Position liegt, an der das Pulver aufgetragen wird.

Nachdem das Rakel 333 in seine in Fig. 4 dargestellte rechte Position zurückgekehrt ist, beginnt der Prozess erneut und wird so lange wiederholt, bis das oberhalb des Substratplattensegments 312b oder eines gegebenenfalls anderen in einer Reihe von Substratplattensegmenten angeordnetem Substratplattensegment zu erstellende Produkt fertig gestellt ist. Dabei wird der Laserstrahl der Laserstrahlquelle 340 über jede Schicht solcherart selektiv geführt, dass zuvor berechnete Bereiche dieser Schicht, welche dem Querschnitt der herzustellenden Produkte in der jeweiligen Schicht auf allen Substratplattensegmenten entsprechen, selektiv ausgehärtet werden.

Nach Abschluss des Fertigungsvorgangs kann das Produkt von dem Substratplattensegment abgetrennt werden. Dabei ist grundsätzlich zu verstehen, dass auch mehrere Produkte oberhalb von einem Substratplattensegment hergestellt werden können und dass auch mehrere Substratplattensegmente nebeneinander in unterschiedlichen Fertigungsstadien mit dem einzigen Rakel 333 beschichtet und dem einzigen Laser 340 selektiv ausgehärtet werden können.

Das in dem Auffangmodul 310c aufgefangene Pulver kann durch Hochfahren der Plattform 312c angehoben werden und durch entsprechendes Verfahren des Rakels 333 von links nach rechts in den Dosiereinschub zurückbefördert werden, um einen neuen Fertigungsprozess zu starten und das Pulver hierbei wieder zu verwenden. Alternativ kann auch nun im nachfolgenden Fertigungsvorgang die Funktion von Dosiermodul und Auffangmodul vertauscht werden, so dass der Schichtauftragsvorgang nun durch eine Bewegung des Rakels von links nach rechts stattfindet und der Schleifvorgang durch eine entsprechend umgekehrte Bewegung von rechts nach links. In diesem Fall ist die aus Heizband, Rakel und Schleifvorrichtung bestehende verfahrbare Einheit entsprechend vorzugsweise um 180° um eine vertikale Achse verstellbar auszubilden.

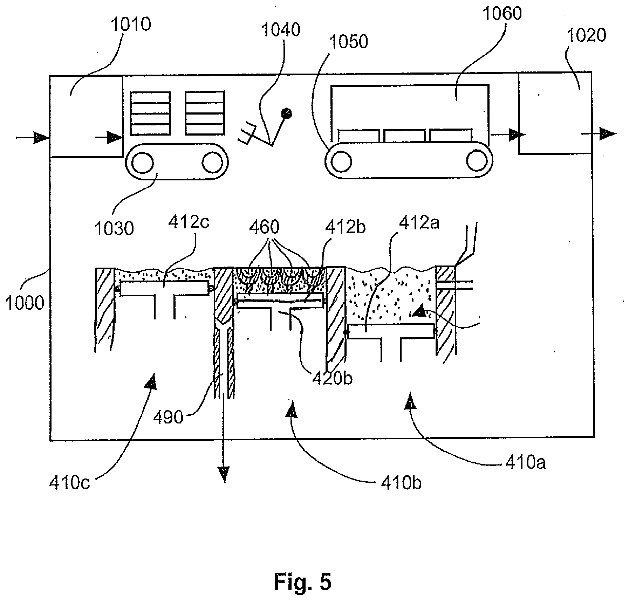

Fig. 5 zeigt eine weitere beispielhafte Ausführungsform. Die in Fig. 5 gezeigte Fertigungsanordnung umfasst eine Prozesskammer 1000, welche eine erste Schleuse 1010 und eine zweite Schleuse 1020 aufweist.

Durch die erste Schleuse 1010 werden Substratplattensegmente zugeführt und auf ein Förderband 1030 aufgelegt. Die Substratplattensegmente werden auf diesem Förderband zwischengelagert und können gegebenenfalls vorgeheizt werden.

Mittels eines Roboterarms 1040 können die Substratplattensegmente auf eine Bauplattform 420b eines Baueinschubs 410b aufgelegt werden, um darauf generativ Produkte herzustellen. Der Baueinschub 410b ist, wie zuvor bezüglich der Ausführungsform gemäß Fig. 4 bezüglich der dortigen gezeigten drei Module 312a-c erläutert, von einem Dosiereinschub 410a und einem Auffangeinschub 410c flankiert und es ist zu verstehen, dass auch mehrere Substratplattensegmente nebeneinander zwischen dem Dosiereinschub und dem Auffangeinschub angeordnet sein können, um eine quasi kontinuierliche Fertigung in der zuvor erläuterten Weise durchzuführen.

Nach Fertigstellung der generativ hergestellten Produkte in dem Baueinschub kann bei der in Fig. 5 dargestellten Ausführungsform das Substratplattensegment 412b in eine untere Position verfahren werden. In dieser unteren Position steht der Bauraum oberhalb des Substratplattensegments 412b mit einem Pulverabsaugkanal 490 in Verbindung, der in die Wandung eingelassen ist, welche den Bauraum als Seitenwand begrenzt. Über diesen Pulverabsaugkanal 490 kann dann das nicht ausgehärtete Pulver aus dem Bereich oberhalb des Substratplattensegments 412b abgesaugt werden.

Der Pulverabsaugkanal 490 ist zugleich solcherart ausgeführt, dass auch das in den Auffangeinschub geschobene Pulver durch den Absaugkanal 490 abgesaugt werden kann, wobei zu verstehen ist, dass dies als optional weitere Funktion vorgesehen sein kann oder auch nicht. Diesbezüglich wird insbesondere auf die unterschiedlichen Betriebsweisen der Ausführungsform mit Dosiermodul und Auffangmodul Bezug genommen, die zur Ausführungsform gemäß Fig. 4 erläutert wurden.

Nachdem das nicht ausgehärtete Pulver aus dem Bereich oberhalb des Substratplattensegments 412b abgesaugt wurde, kann die Bauplattform in die oberste Position vertikal verfahren werden und das Substratplattensegment 412b wiederum mittels des Roboterarms 1040 gefasst werden und einem zweiten Förderband 1050 zugeführt werden.

Mit dem zweiten Förderband 1050 wird das Substratplattensegment 412b mitsamt der darauf angeordneten Produkte durch einen Temperofen 1060 gefördert, um die darauf befindlichen Produkte einer Temperung zu unterziehen und hierdurch die gewünschten Bauteileigenschaften herzustellen. Nach erfolgter Temperung kann das Substratplattensegment 412b durch die Schleuse 1020 aus der Prozesskammer 1000 ausgeschleust werden.

Durch den Aufbau gemäß Fig. 5 wird es möglich, sowohl die Vorwärmung und Bereitstellung der Platten, als auch die gesamte generative Fertigung und Pulverhandhabung sowie das nachfolgende Tempern in einer kontrollierten Atmosphäre, insbesondere einer Inertgas- oder Aktivgasatmosphäre innerhalb einer Prozesskammer 1000 auszuführen.

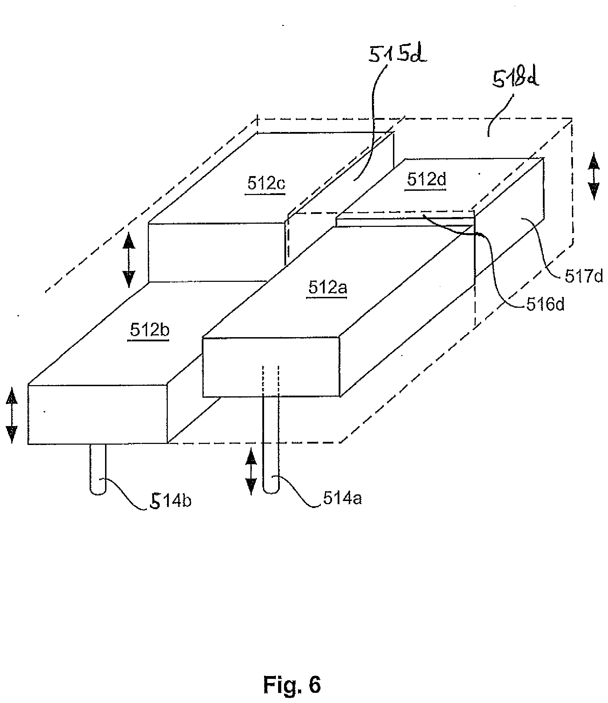

Fig. 6 zeigt eine weitere beispielhafte Ausführungsform der Vorrichtung bzw. des Verfahrens. Dargestellt sind in Fig. 6 vier in zwei Reihen und zwei Spalten angeordnete Substratplattensegmente 512a-d. Wie zu erkennen ist, ist jedes der Substratplattensegmente individuell höhenverstellbar mittels jeweils einer entsprechenden Hebe/Senkvorrichtung 514a-d. Sowohl die Substratplattensegmente einer Zeile als auch die Substratplattensegmente einer Spalte sind unabhängig voneinander vertikal verschiebbar, so dass auf jedem der Substratplattensegmente Produkte generativ in unterschiedlichen Fertigungsstadien hergestellt werden können.

Zwischen den jeweiligen Substratplattensegmenten sind zwecks des individuellen Aufbaus eines Pulverbetts oberhalb des jeweiligen Substratplattensegments Trennwände vorzusehen. Hierbei ist in der gezeigten Ausführungsform vorgesehen, dass diese Trennwände nicht Bestandteil der Vorrichtung sind, sondern dass die Trennwände durch selektives Aushärten des Pulvermaterials im Randbereich der jeweiligen Substratplattensegmente kontinuierlich aufgebaut werden und folglich mit dem generativ hergestellten Produkt im Mittelbereich des Substratplattensegments vertikel mitwachsen. Alternativ hierzu kann vorgesehen sein, dass Trennwände als Bestandteil der Fertigungsvorrichtung bereitgestellt sind und solcherart angeordnet sind, dass ihre Oberkante bündig mit einer Ebene, in welcher sich ein Pulverauftragsrakel bewegt, abschließen.

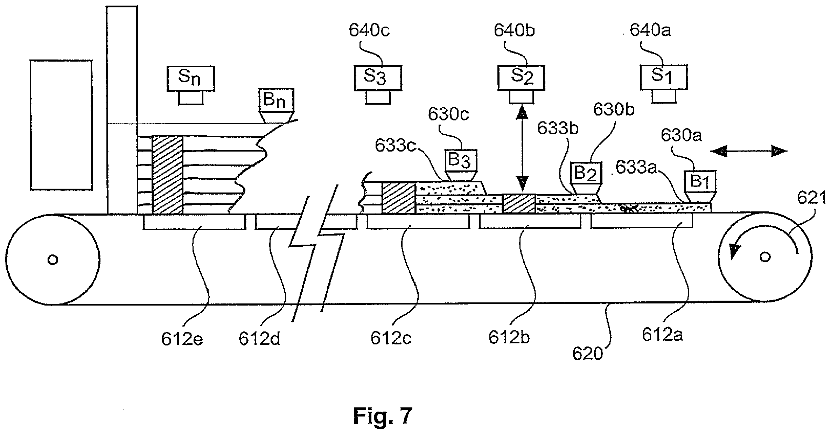

Fig. 7 zeigt eine siebte beispielhafte Ausführungsform. Die Ausführungsform weist ein Endlosförderband 620 auf, entlang dem mehrere Substratplattensegmente 612a-e in Förderrichtung 621 angeordnet sind.

Die Substratplattensegmente 612a-e sind solcherart platziert, dass ihre obere Oberfläche in einer gemeinsamen Ebene liegt.

Oberhalb der Substratplattensegmente 612a-e sind mehrere Beschichtungsvorrichtungen 630a-d angeordnet. Die Einzel-Beschichtungsvorrichtungen 630a-d umfassen jeweils eine Rakel 633a-d. Die Unterkante des Rakels 633a ist in dem Abstand einer Schicht von der Oberfläche der Substratplattensegmente 612a-e angeordnet. Die untere Kante des Rakels 633b ist gegenüber dem vorhergehenden Rakel 633a um einen Schichtabstand mehr von der Oberfläche der Substratplattensegmente 612a-e beabstandet und in gleicher Weise sind die Unterkanten der Rakel 633c, d entsprechend um jeweils eine Schichtdicke mehr von der Oberfläche der Substratplattensegmente gegenüber dem vorhergehenden, benachbarten Rakel angehoben.

Grundsätzlich ist die in Fig. 7 dargestellte Ausführungsform so zu verstehen, dass eine Vielzahl von nebeneinander angeordneten Einzel-Beschichtungsvorrichtungen a, b, c, d ... in einer solch vertikal gestaffelten Höhenanordnung bereitgestellt ist.

Zwischen jeweils zwei Schichtauftragsvorrichtungen 633a, b, c ... ist ein Bereich, in dem die aufgetragene Schicht mittels eines Lasers 640a, b, c, d selektiv ausgehärtet werden kann. Dabei ist jeder Einzel-Beschichtungsvorrichtung ein entsprechender Laser zugeordnet.

Das Förderband 620 wird während der Fertigung kontinuierlich oder diskontinuierlich solcherart fortbewegt, dass sich der Obertrum in der in Fig. 7 dargestellten Konstellation von rechts nach links bewegt. Hierdurch wird oberhalb der Substratplattensegmente 612a, b, c ... ein Materialbett durch aufeinander folgende Schichten aufgetragen, welches umso höher wird, je weiter ein Substratplattensegment von rechts nach links mittels des Förderbandes gefördert ist. In entsprechend gleicher Weise erhöht sich die Bauhöhe der auf den jeweiligen Substratplattensegmenten generativ hergestellten Produkte.

Das Prinzip der in Fig. 7 dargestellten Ausführungsform ist einerseits so zu verstehen, dass durch eine Vielzahl von Pulverauftragsvorrichtungen und die Summe der mit diesen Pulverauftragsvorrichtungen in einem Bewegungsgang des Förderbandes aufgetragenen Schichten die gewünschte Höhe des Pulverbetts und somit der hergestellten Produkte erreicht werden kann. Alternativ hierzu kann auch das Förderband 620 reziprok während eines Herstellungsprozesses mehrfach hin- und herbewegt werden und hierbei die mehreren Pulverauftragsvorrichtungen oder das Förderband vertikal verschoben werden, um mittels einer Anzahl von N Pulverauftragsvorrichtungen während eines Fertigungsprozesses eine Anzahl von M x N Pulverschichten aufzutragen, wobei M der Anzahl der reziproken Bewegungen des Förderbandes entspricht. Hierbei ist zu verstehen, dass die N Pulverauftragsvorrichtungen nach jeder reziproken Bewegung des Förderbandes um einen Betrag angehoben oder das Förderband um einen solchen Betrag abgesenkt wird, der der N-fachen Schichtstärke entspricht, um hierbei zu erreichen, dass die am weitesten rechts und folglich am tiefsten liegende Pulverauftragsvorrichtung im darauf folgenden Auftragsvorgang ihre Schicht auf die zuvor von der am weitesten links und folglich am höchsten angeordneten Pulverauftragsvorrichtung aufgetragenen Schicht aufträgt.

Nach entsprechender Fertigstellung der Produkte erfolgt in Förderrichtung nach links des Förderbandes 520 eine Absaugung des nicht ausgehärteten Pulvermaterials 590 aus dem Bereich oberhalb eines Substratplattensegments, auf dem fertig gestellte Produkte aufgebaut liegen. Dabei ist zu verstehen, dass jeweils nur oberhalb des am weitesten links liegenden Substratplattensegments eine solche Pulverabsaugung erfolgt, wohingegen das rechts hiervon liegende Substratplattensegment aufgrund der in der Regel dort noch nicht fertig gestellten Produkte noch nicht abgesaugt wird. Dies kann durch entsprechend parallel aufgebaute Trennwände zwischen den Substratplattensegmenten erreicht werden.

Nach Absaugung des nicht ausgehärteten Pulvers können die auf dem Substratplattensegment hergestellten Produkte von diesem abgetrennt werden. Gegebenenfalls kann nach diesem Abtrennvorgang mittels einer links von der Absaugung angeordneten Vorrichtung zur Oberflächenglättung, insbesondere einer Fräs- oder Schleifstation oder einer Vorrichtung zur Laserglättung die Oberflächen des Substratplattensegmentes, wieder plan zubereitet werden, um hierauf folgend das Substratplattensegment einer erneuten generativen Fertigung zuzuführen.

Es ist zu verstehen, dass die mehreren Strahlungsquellen durch jeweils einzelne Laserquellen bereitgestellt werden können oder durch einen oder mehrere Laserquellen, deren Strahl geteilt und folglich auf entsprechend mehrere Stellen gerichtet werden kann. Hierbei ist weiter zu verstehen, dass der aufgeteilte Strahl und die hieraus erzeugten mehreren Strahlengänge auch durch entsprechende Strahlungsleitmittel individuell über die jeweiligen Schichten geführt werden können, um jede Schicht individuell selektiv auszuhärten. Der Schichtauftragsvorgang für alle Substratplattensegmente findet in einem gemeinsamen ersten Arbeitsgang, gefolgt von einem selektiven Aushärtungsvorgang in einem zweiten Arbeitsgang statt. Dies kann bei entsprechender Anzahl von Einzel-Beschichtungsvorrichtungen unter kontinuierlicher Bewegung des Förderbandes oder - bei reziproker Bewegung des Förderbandes - in einem quasi-kontinuierlichen Prozess stattfinden.

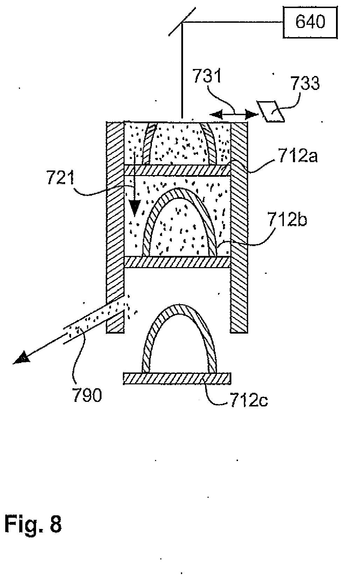

Fig. 8 ist eine weitere beispielhafte Ausführungsform zu entnehmen. Bei dieser Ausführungsform sind mehrere Substratplattensegmente 712a, b übereinander angeordnet und durch gemeinsame Seitenwände 715 - 718 wird der Bauraum oberhalb der jeweiligen Substratplattensegmente begrenzt. Die Substratplattensegmente 712a, b ... bewegen sich hierbei in einer vertikalen Bewegungsrichtung von oben nach unten durch den durch die Seitenwände begrenzten Bauraum. Mittels einer Schichtauftragsvorrichtung wird hierbei in den jeweils oberhalb des obersten Substratplattensegments 712b bereitgestellten Bauraum iterativ Schichten aufgetragen und mittels einer Laserstrahlquelle selektiv ausgehärtet. Dabei ist zu verstehen, dass der Schichtauftragsvorgang in gleicher Weise wie zuvor erläutert mittels eines Rakels erfolgen kann. Dieser Rakel bewegt sich bei der in Fig. 8 gezeigten Ausführungsform in einer horizontalen Ebene, also senkrecht zur Förderrichtung der Substratplattensegmente 712a, b.

Sobald oberhalb eines Substratplattensegments ein ausreichend hohes Pulverbett aufgetragen worden ist und das darin eingebettete, generativ hergestellte Produkt fertig gestellt ist, kann ein neues Substratplattensegment darauf aufgelegt werden, wobei es jeweils in entsprechender Weise an einer Fördervorrichtung für die vertikale Bewegung angekoppelt wird.

Die Substratplattensegmente mit darauf aufgebauten fertig gestellten Produkten können in einem unterhalb der Schichtauftragsvorrichtung und des Bauraums, in dem generativ hergestellt wird, angeordneten Fertigungsabschnitt entnommen werden, indem das Pulver abgesaugt und die Produkte von dem Substratplattensegment abgetrennt werden. Hierzu kann insbesondere eine Kanalabsaugung verwendet werden, wie sie bezüglich Fig. 5 erläutert wurde, um hierauf folgend die Produkte in einen Bereich zu fördern, der nicht von seitlichen Wänden begrenzt ist und hierdurch die Entnahme der Produkte oder des gesamten Substratplattensegments aus der Vertikalfördervorrichtung zu ermöglichen.

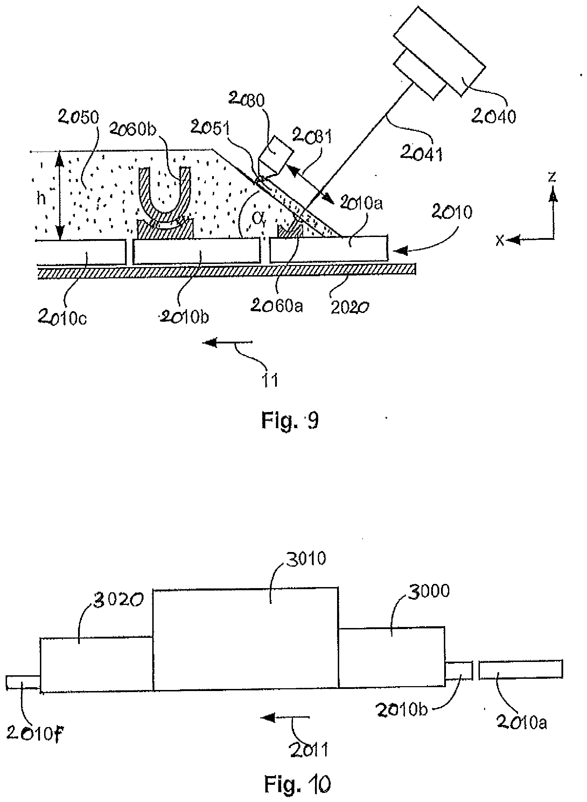

Fig. 9 zeigt eine Substratplatte 2010, die aus mehreren Substratplattensegmenten 10a-c besteht. Die Substratplattensegmente 2010a-c sind lösbar mit einem darunter angeordneten Substratplattenträger 2020 verbunden. Der Substratplattenträger 2020 und die Substratplattensegmente 2010a-c sind solcherart angeordnet, dass die Oberfläche der Substratplattensegmente 2010a-c im Betriebszustand der Vorrichtung horizontal, d.h. senkrecht zur Schwerkraftrichtung ausgerichtet sind.

In Schwerkraftrichtung oberhalb von der oberen Auflagefläche der Substratplattensegmente 2010a-c ist eine Beschichtungsvorrichtung 2030 angeordnet. Die Beschichtungsvorrichtung 2030 ist entlang einer Bewegungsrichtung 2031 verschiebbar. Die Bewegungsrichtung 2031 ist geradlinig und schließt mit der durch die obere Auflagefläche der Substratplattensegmente 2010a-c definierten Ebene einen Winkel α ein. Durch zyklisches Hin- und Herbewegen der Beschichtungsvorrichtung 2030 entlang der Bewegungsrichtung 2031 kann oberhalb der Substratplattensegmente 2010a-c eine in einem Winkel α zur Horizontalen geneigte Pulverschicht aufgetragen werden.

In jedes Substratplattensegment 2010a-c kann eine Heizung eingebaut sein, welche das Substratplattensegment und das darauf angeordnete Pulverbett auf einer gewünschten Temperatur hält. Hierdurch, und durch ein oder mehrere gegebenenfalls zusätzlich vorgesehene Strahlerfelder und/oder Heizbänder im Bereich der Beschichtungsvorrichtung, welche die aufgetragene Pulverschicht erwärmen beziehungsweise dessen Temperatur aufrechterhalten, kann die Vorrichtung dahingehend optimiert werden, dass ein gewünschter, vorgewärmter Pulverzustand des Pulvers vordem selektiven Aushärtungsvorgang erreicht wird.

Die Substratplattensegmente 2010a-c können kontinuierlich oder in getakteter, quasi-kontinuierlicher Weise in einer Bewegungsrichtung 2011 fortbewegt werden, die parallel zur Horizontalen liegt. Durch die Bewegungsrichtung 2011 wird nach Auftrag einer Schicht mittels der Beschichtungsvorrichtung 2030 ein Abstand zwischen der Ebene, in der sich die Beschichtungsvorrichtung 2030 bewegt und der aufgetragenen Schicht erzeugt, welcher der Schichthöhe der nächsten, aufzutragenden Schicht entspricht.

Eine Strahlungsquelle 2040, die ein Hochleistungslaser ist, ist solcherart angeordnet, dass sein Strahl etwa senkrecht, vorzugsweise genau senkrecht auf die Oberfläche einer aufgetragenen Schicht trifft. Der Strahl der Strahlungsquelle 2040 kann mit Strahllenkungsmitteln solcherart gelenkt werden, dass er auf vorbestimmte Bereiche einer aufgetragenen Schicht trifft und diese selektiv aushärtet.

Die Strahllenkungsmittel sind mit einer Steuerungsvorrichtung signaltechnisch gekoppelt. In der Steuerungsvorrichtung sind Fertigungsdaten für zumindest die jeweils gleichzeitig herzustellenden Produkte gespeichert. Die Fertigungsdaten umfassen insbesondere Lagedaten, welche die Lage eines jeweiligen Produkts auf der Substratplatte charakterisieren und Geometriedaten, welche die Geometrie des jeweiligen Produkts charakterisieren. Die Geometriedaten sind solcherart aufbereitet, dass darin die geometrischen Daten einzelner Querschnitte des Produkts enthalten sind. Die jeweilige Lage eines solchen Querschnitts und die für diesen Querschnitt gespeicherten Geometriedaten entspricht der Lage der jeweils aufgetragenen Materialschicht, aus dem dieser Produktquerschnitt hergestellt wird und der Geometrie des Produkts in dieser Materialschicht. In der dargestellten Ausführungsform mit senkrecht auf der Platte aufstehenden Produkten entsprechen die geometrischen Daten daher schräg verlaufenden Querschnittsebenen durch dieses Produkt.

Wie zu erkennen ist, ist oberhalb des Substratplattensegmentes 2010c ein Pulverbett aufgetragen, welches aus mehreren Pulverschichtlagen zusammengesetzt ist und welches die maximale Höhe h über den Substratplattensegmenten aufweist. Auch oberhalb des Substratplattensegmentes 2010b ist diese maximale Höhe in einem links liegenden Bereich bereits erreicht, allerdings in einem hiervon rechts, entgegen der Förderrichtung 2011 liegenden Bereich noch nicht vollständig erreicht. Stattdessen verläuft die Oberfläche des Pulverbetts in diesem rechten Bereich des Substratplattensegmentes 2010b, ebenso wie in einem linken Bereich des Substratplattensegmentes 2010c geneigt im Winkel α1.

Oberhalb des Substratplattensegmentes 2010b ist ein generativ hergestelltes Produkt 2060b im Pulverbett in ausgehärteter Form angeordnet. In gleicher Weise wird oberhalb des Substratplattensegmentes 2010a ein Produkt 2060c generativ hergestellt. Dieser Herstellvorgang erfolgt, indem nach dem Auftrag jeder Pulverschicht 1051 vorbestimmte Bereiche dieser Pulverschicht mittels der Strahlungsquelle 2040 selektiv ausgehärtet werden. Hierauf folgend wird durch Vorschub der Substratplattensegmente in der Förderrichtung 2011 ein der Schichthöhe entsprechender Abstand zwischen der Ebene der Beschichtungsvorrichtung 2030 und der zuvor aufgetragenen Schicht hergestellt und hiernach erfolgt ein erneuter Beschichtungsvorgang durch Bewegung der Beschichtungsvorrichtung 2030 entlang der Bewegungsrichtung 2031. An der Beschichtungsvorrichtung kann vorzugsweise eine Schleifeinrichtung angeordnet sein, die entweder in der Bewegungsrichtung beim Pulverauftrag vor der Position, an der das Pulver aufgetragen wird, angeordnet ist und dazu dient und ausgebildet ist, dass die zuvor ausgehärteten Bereiche oberflächlich angeschliffen werden. Hierdurch kann die Geometrietreue des generativ hergestellten Produkts verbessert und die Anbindung der darauf folgenden auszuhärtenden Bereiche zu erhöht werden. Alternativ hierzu ist es möglich, den Schleifvorgang in einem Rückhubvorgang der Beschichtungsvorrichtung auszuführen, das heißt zwischen dem Fertigungsschritt der selektiven Aushärtung und dem Fertigungsschritt des erneuten Pulverauftrags, In diesem Fall ist die Anordnung der Schleifeinrichtung an der Beschichtungsvorrichtung in Bezug auf die Position, an der das Pulver aufgetragen wird, konstruktiv frei wählbar, da Schleifvorgang und Pulverauftragsvorgang nicht während ein und derselben Bewegung der Beschichtungsvorrichtung erfolgen.

Dieser Prozess wird wiederholt durchgeführt, bis das gesamte Produkt 60c hergestellt ist. Durch die Förderbewegung 2011 werden die solcherart generativ hergestellten und fertig gestellten Produkte 2060b, c nach links weitergefördert, wo sie nach entsprechender Entfernung des nicht ausgehärteten Pulvers von der Substratplatte entfernt werden können.

Fig. 10 zeigt hierzu einen möglichen Aufbau einer Fertigungsanordnung und einen entsprechenden Prozessablauf. Wie erkennbar ist, werden die Substratplattensegmente 2010a, b, c ... von einer rechten Seite in einer horizontalen Bewegungsrichtung 2011 in eine Eingangsschleuse 3000 eingeschleust und gelangen in dergleichen Bewegungsrichtung 2011 aus der Eingangsschleuse 3000 in eine Prozesskammer 3010. In der Prozesskammer 3010 ist der in Fig. 9 dargestellte Fertigungsabschnitt angeordnet und findet der bezüglich Fig. 1 erläuterte Fertigungsvorgang statt. Nach entsprechender generativer Herstellung der Produkte in der Prozesskammer 3010 gelangen diese durch weitere Bewegung entlang der Bewegungsrichtung 2011 in einer Ausgangsschleuse 3020 und werden hierdurch aus der Prozesskammer ausgeschleust.

Durch die Einschleusung der unbeschichteten Substratplattensegmente durch die Eingangsschleuse 3000 und die Ausschleusung der beschichteten und mit generativ hergestellten Produkten bestückten Substratplattensegmenten durch die Ausgangsschleuse 3020 kann in der Prozesskammer 3010 eine für die generative Fertigung günstige Atmosphäre, insbesondere eine Inertgasatmosphäre oder eine Aktivgasatmosphäre, aufrechterhalten werden und hierdurch die Produktqualität sichergestellt werden.

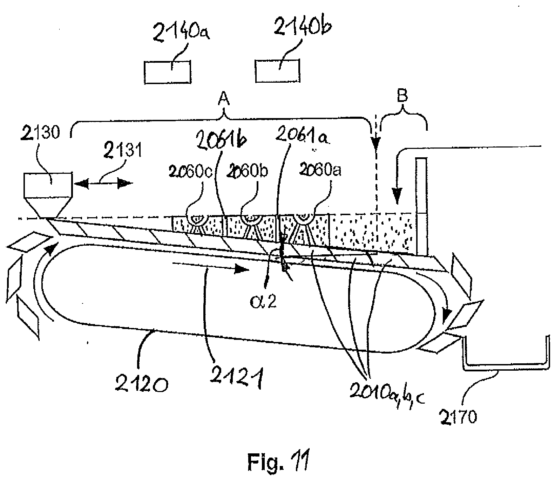

Fig. 11 zeigt eine zweite Ausführungsform eines Fertigungsabschnitts zur generativen Fertigung sowie eines Fertigungsabschnitts zur Abtrennung und Entnahme von generativ hergestellten Produkten. Eine Mehrzahl von Substratplattensegmenten 2010a, b, c ... ist solcherart nebeneinander angeordnet, dass hierdurch eine zusammenhängende Substratplatte bereitgestellt wird. Die obere Oberfläche dieser durch die Substratplattensegmente 2010a, b, c... bereitgestellten Substratplatte ist in einem Winkel α zur Horizontalen geneigt, d.h. diese Oberfläche steht in einem Winkel 90° - α zur Schwerkraftrichtung.

Oberhalb der Substratplattensegmente 2010a, b, c ... ist eine Beschichtungsvorrichtung 2130 angeordnet, die sich entlang einer horizontalen Bewegungsrichtung 2131 zyklisch hin- und herbewegen kann. Mittels der Beschichtungsvorrichtung 2130 wird auf diese Weise eine Pulverschicht aus einem Pulverreservoir, welches an der Beschichtungsvorrichtung 2130 angeordnet sein kann oder welches entlang des Bewegungspfades 2131 der Beschichtungsvorrichtung 2130 angeordnet sein kann, aufgetragen.

Mittels der Beschichtungsvorrichtung 2130 kann durch Bewegung entlang der Beschichtungsrichtung 2131 eine Pulverschicht oberhalb der Substratplattensegmente 2010a, b, c ... aufgetragen werden, die in einem Winkel α zur oberen Oberfläche der Substratplattensegmente liegt.

Auf den Substratplattensegmenten 2010a, b, c ... wird durch selektives Aushärten jeder aufgetragenen Schicht mittels zweier als Hochleistungslaser ausgebildeten Strahlungsquellen 2140a, b vorbestimmte Bereiche jeder Pulverschicht selektiv ausgehärtet und hierdurch Produkte 2060a, b auf den Substratplattensegmenten schichtweise generativ aufgebaut. Des Weiteren werden zwischen jedem Produkt oder zwischen einer Gruppe von Produkten jeweils Trennwände 2061a, b oberhalb der Substratplattensegmente durch entsprechend selektives Aushärten der Schichten aufgebaut. Diese Trennwände unterteilen das Pulverbett oberhalb der Substratplattensegmente in mehrere Pulverbettbereiche. In jedem Pulverbettbereich ist ein oder sind mehrere Produkte angeordnet, die gleichzeitig entnommen werden können.

Die Substratplattensegmente 2010a, b, c ... sind an einem Endlosförderband 2120 befestigt und werden mittels dieses Endlosförderbands 2120 in einer Förderrichtung 2111 kontinuierlich oder diskontinuierlich fortbewegt. In einem Fertigungsabschnitt A erfolgt durch diese Förderbewegung 2121 und ein wiederholtes Auftragen von Pulverschichten mittels der Beschichtungsvorrichtung 2130, gefolgt von einem selektiven Aushärten jeder aufgetragenen Schicht die generative Fertigung der Produkte. Die Pulverbeschichtungsvorrichtung 2130 bewegt sich hierbei entlang einer Bewegungsrichtung 2131, die in einem Winkel a2 zur Bewegungsrichtung 2121 der Substratplattensegmente liegt.

In einem Fertigungsbereich B wird nicht ausgehärtetes Pulvermaterial durch eine Absaugvorrichtung aus dem Bereich zwischen zwei generativ hergestellten Trennwänden 2061a-d entfernt und hierauf folgend sowohl die Trennwände als auch die in diesem Bereich zwischen den beiden Trennwänden generativ hergestellten und fertiggestellten Produkte entnommen. In Förderrichtung 2121 hinter dem Fertigungsabschnitt B werden die Substratplattensegmente entlang einer Umlenkrolle in den Untertrum des Förderbandes 2120 geführt und laufen entlang dieses Untertrums bis zu einer zweiten Umlenkrolle, an der sie wiederum in den Obertrum geführt werden, um einer erneuten Beschichtung mit Pulverschichten und generativer Fertigung von Produkten zugeführt zu werden.

Eine Auffangwanne 2170 ist bereitgestellt, um überschüssiges Pulver aufzufangen, welches bei Umlenkung der Substratplattensegmente abfällt.

Wie aus Fig. 11 erkennbar ist, können einzelne Produkte auf einem einzigen Substratplattensegment generativ aufgebaut werden oder ein einzelnes Produkt kann auch auf mehreren Substratplattensegmenten generativ aufgebaut werden. Dabei hängt es allein von der Größe der Substratplattensegmente und der darauf generativ hergestellten Produkte ab, ob mehrere Produkte auf einem Substratplattensegment oder ein Produkt auf mehreren Substratplattensegmenten oder jeweils ein Produkt pro Substratplattensegment hergestellt wird. Insbesondere kann durch die Verwendung von Stützen auch ein Produkt auf einem einzigen Substratplattensegment hergestellt werden, dessen Abmessungen größer als die Abmessungen des Substratplattensegments selbst sind.

Die in Figur 11 gezeigte Ausführungsformen eignen sich insbesondere für die Stereolithographie. Sowohl in der in Fig. 9 als auch in der in Fig. 11 dargestellten Ausführungsform ist der Winkel α1 bzw. a2 zwischen Schichtauftragsrichtung und Oberfläche der Substratplattensegmente kleiner als der Pulverschüttwinkel des aufgetragenen Pulvers, um hierdurch eine Stabilität des aufgetragenen Pulverbetts gegenüber der Einwirkung der Schwerkraft zu erzielen. Grundsätzlich könnte bei der in Fig. 11 dargestellten Ausführungsform der Winkel a2 auch größer als dieser Pulverschüttwinkel gewählt werden, da das Pulverbett durch die Trennwände 2061a-d stabilisiert ist und die Pulverschichtlagen selbst horizontal aufgetragen werden und liegen.

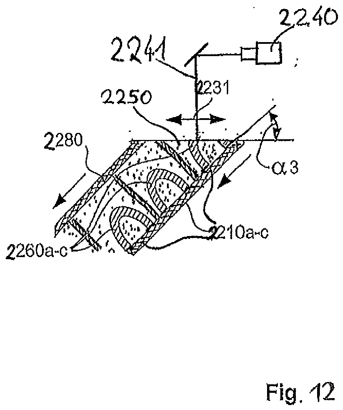

Fig. 12 zeigt eine schematische Darstellung einer alternativen Ausführungsform, bei welcher der Winkel a3 zwischen der Ebene, in welcher der Pulverschichtauftrag erfolgt und der Oberfläche der Substratplattensegmente größer als der Pulverschüttwinkel sein kann. Bei dieser Ausführungsform werden die Produkte 2260a-c ebenfalls auf Substratplattensegmenten 2210a-c generativ aufgebaut und hierbei ein Pulverbett 2250 oberhalb dieser Substratplattensegmente hergestellt. Das Pulverbett 2250 wird mittels einer parallel zu den Substratplattensegmenten im Fertigungsabschnitt verlaufenden Deckplatte 2280 stabilisiert. Hierbei kann die Deckplatte 2280 insbesondere sich kontinuierlich mit den Substratplattensegmenten fortbewegen, um eine Relativbewegung zwischen dem Pulverbett und der Deckplatte 2280 zu verhindern.

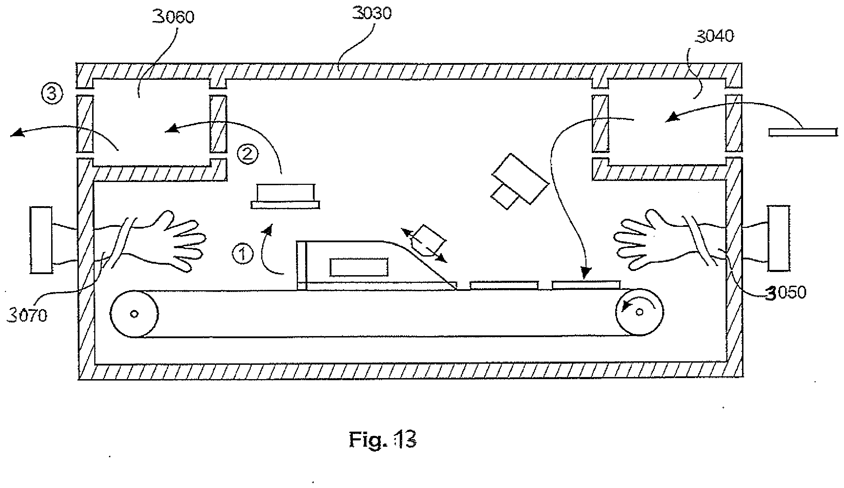

Fig. 13 zeigt eine schematische Darstellung einer Fertigungsanordnung zur kontinuierlichen Herstellung generativ hergestellter Produkte. Die Ausführungsform gemäß Fig. 13 stellt eine Alternative zu der in Fig. 10 dargestellten Ausführungsform dar. Entgegen der in Fig. 10 dargestellten Ausführungsform sind bei der in Fig. 13 dargestellten Ausführungsform sämtliche zur generativen Herstellung und Entnahme der Produkte aus dem generativen Herstellungsprozess erforderlichen Fertigungsabschnitte innerhalb einer Prozesskammer 3030 angeordnet, die unter kontrollierter Atmosphäre, insbesondere einer Inertgas- oder Aktivgasatmosphäre gehalten werden kann.

Wie zu erkennen ist, ist innerhalb der Prozesskammer 3030 ein Fertigungsprozess angeordnet, dessen prinzipielle Systematik dem Fertigungsprozess gemäß Fig. 9 entspricht. Es ist aber zu verstehen, dass in gleicher Weise die in Fig. 13 dargestellte Fertigungsanordnung solcherart ausgestaltet sein kann, dass ein Fertigungsprozess gemäß Fig. 11 oder Fig. 12 in der Prozesskammer stattfindet. Die Prozesskammer 3030 weist eine erste Schleuse 3040 auf, durch welche neue, unbeschichtete und nicht mit Produkten bestückte Substratplatten eingeschleust werden können und auf einem Endlosförderband befestigt werden können. Um diesen Vorgang manuell vornehmen zu können, ist ein Arbeitshandschuh 3050 gasdicht in einem solchen Bereich angeordnet, der eine Aufnahme von Substratplatten aus der Schleuse 3040 und deren Befestigung auf dem Endlosförderband ermöglicht.

Des Weiteren ist an der Prozesskammer 3030 eine zweite Schleuse 3060 angeordnet. Durch die Schleuse 3060 können Substratplatten mit darauf angeordneten, fertig gestellten Produkten aus der Prozesskammer 3030 ausgeschleust werden. Um diesen Vorgang manuell durchführen zu können, ist wiederum im Bereich der Schleuse 3060 ein Handschuh angeordnet, mittels dem in die Prozesskammer 3030 hineingegriffen werden kann, die Substratplattensegmente mitsamt darauf angeordneter Produkte von dem Endlosförderband abgelöst werden können und durch die Schleuse 3060 aus der Prozesskammer 3030 ausgeschleust werden können.

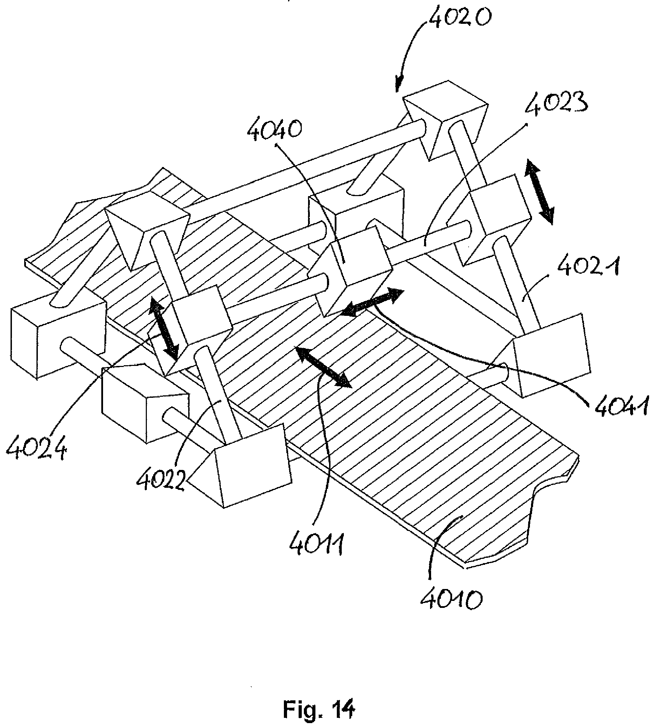

Bei der in Figur 14 gezeigten weiteren Ausführungsform ist die Substratplatte 4010 als Endlosförderband ausgebildet und läuft durch in einer Richtung 4011 durch ein Rahmengestell 4020 hindurch. Das Rahmengestell 4020 ist als im Querschnitt dreieckiger Profilaufbau ausgebildet, dessen Basisfläche parallel zu der Oberfläche des Endlosförderbandes angeordnet ist.

An zwei zu dieser Basisfläche geneigt angeordneten Rahmenstreben 4021, 4022 ist eine Führungsstange 4023 entlang einer Richtung 4024 verschieblich gelagert. Die Führungsstange überstreicht bei Verschiebung entlang der Rahmenstreben 4021, 4022 eine Fläche, die schräg geneigt zu der Oberfläche des Endlosförderbandes 4010 verläuft, auf dem die Produkte generativ aufgebaut werden. Vorzugsweise kann die Neigung dieser Fläche eingestellt werden, um hierdurch eine Anpassung an verschiedene Materialien und Produktformen vorzunehmen. So ist es für die zeiteffiziente Herstellung langer Bauteile vorteilhaft, diese in ihrer Längserstreckung parallel zur Substratplatte anzuordnen und einen kleinen Neigungswinkel einzustellen, wohingegen es für die schnelle Herstellung mehrerer kleiner Produkte in Folge vorteilhaft ist, den Winkel groß einzustellen, um eine Fertigstellung und Entnahme eines ersten Produkts zu ermöglichen, während ein nachfolgendes Produkt noch hergestellt wird.

An der Führungsstange 4023 ist ein Druckkopf 4040 befestigt, der entlang der Führungsstange 4023 in einer Richtung 4041 verschieblich gelagert ist. Der Druckkopf 4040 ist ausgebildet, um selektiv einen Materialauftrag vorzunehmen. Hierbei wird ein Material auf bestimmte Bereiche einer Schicht aufgetragen und härtet hiernach aus. Diese Aushärtung kann - je nach Art und Beschaffenheit des aufgetragenen Materials - durch Trocknung oder chemische Aushärtung an Luft, durch Abkühlung aus einem schmelzflüssigen Zustand, durch Reaktion von zwei in dem Material enthaltenen Reagenzien oder durch andere chemische oder physikalische Vorgänge erreicht werden.

Mit der Vorrichtung gemäß Fig. 14 wird eine Anordnung zur generativen Fertigung bereitgestellt, bei welcher ein Druckkopf in einer Ebene frei beweglich ist, die schräg zu einer Substratplattenoberfläche angeordnet ist und durch die Richtungen 4024 und 4041 aufgespannt wird, Der Druckkopf stellt durch Auftragen von Material auf die Substratplattenoberfläche bzw. schräg darauf aufgebaute Schichten schichtweise ein Produkt her. Der Drucckopf ist dabei an einem Rahmengestell angeordnet, dessen Abmessungen so gewählt sind, dass die Substratplatte durch diesen Rahmen hindurchgeführt werden kann, insbesondere als ein durch das Rahmengestell hindurchlaufendes Endlosförderband ausgebildet sein kann.

Auf diese Weise wird es mit dieser Vorrichtung in einfacher Form möglich, Produkte mit einer sehr großen Länge generativ herzustellen, indem diese Produkte unter einer horizontalen Vorschubrichtung der Substratplatte aufgebaut werden. Die Produkte können unmittelbar auf der Substratplattenoberfläche aufgebaut werden, wahlweise aber auch oberhalb der Substratplattenoberfläche und können nebeneinander, hintereinander oder übereinander versetzt hergestellt werden. Dabei kann vorgesehen sein, die Produkte durch Hilfsstrukturen aneinander abzustützen, um deren Lage zu sichern und die Fertigungspräzision zu erhöhen, wobei diese Hilfsstrukturen vorzugsweise Sollbruchstellen zur späteren leichten Entfernung aufweisen können.

Die in Figur 14 gezeigte Vorrichtung eignet sich insbesondere auch dazu, um neben der Herstellung von dreidimensionalen Produkten in einem ersten Auftragsmodus in der zuvor beschriebenen Weise auch die Bedruckung von Druckträgern in einem zweiten Auftragsmodus zu realisieren. Dabei wird die Achse 4023 des Druckkopfs 4040 in eine entlang der Bewegungsrichtung 4024 fixierte Position gefahren, so dass die Achse 4023 während des Drucks feststeht. Auf dem Förderband 4010 kann ein Blatt Papier, eine Folie oder dergleichen als Druckträger in Förderrichtung 4011 gefördert werden und hierbei durch die Bewegung des Druckkopfs 4040 entlang der Achse 4023 in Kombination mit der Bewegung entlang der Förderrichtung 4011 ein zweidimensionaler Druck durch Abgabe einer Farbe oder mehrerer Farben auf das Papier/die Folie erfolgen.

Dabei ist zu verstehen, dass die in Figur 14 dargestellte Schrägstellung der Achse 4022 und entsprechende Bewegungsrichtung 4024 nicht notwendiger Weise für die Ausgestaltung der Vorrichtung zum 3D-Druck und 2D-Druck in einem ersten und zweiten Auftragsmodus erforderlich ist. Stattdessen sind andere Geometrien, insbesondere Geometrien, in denen die Achse 4022 senkrecht zum Förderband steht, ebenfalls ausführbar, ohne die Wahlmöglichkeit eines zwei- oder dreidimensionalen Drucks zur Herstellung von bedruckten Druckträgern bzw. dreidimensionalen Produkten hierdurch zu verlieren.

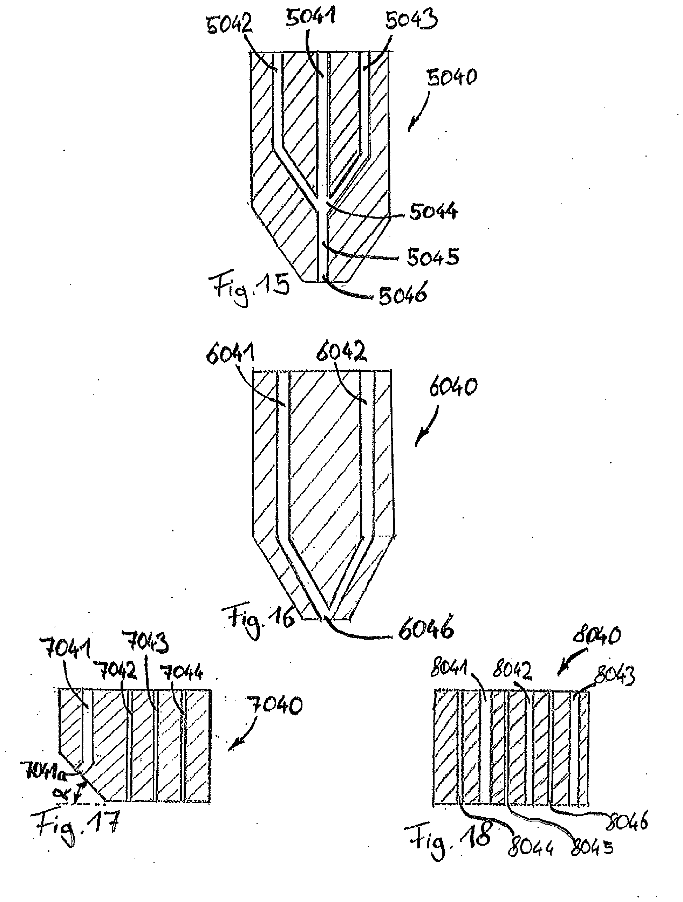

Die Vorrichtung nach Figur 14 eignet sich insbesondere auch dazu, um in einem dritten Auftragsmodus selektiv eingefärbte dreidimensionale Produkte mit individueller Geometrie herzustellen. Hierzu ist in dem Druckkopf 4040 sowohl ein Farbleitungskanal als auch ein Leitungskanal für ein aushärtbares Material bereitgestellt. Die Farbe kann dann entweder unmittelbar im Druckkopf 4040 dem aushärtbaren Material zugemischt werden und mit diesem gemeinsam abgegeben werden oder sie kann separat aus einer eigenen Austrittsöffnung aus dem Druckkopf 4040 auf eine bereits aufgetragene Schicht abgegeben werden. Die Figuren 15 bis 18 zeigen verschiedene Varianten von Druckköpfen im Querschnitt, die sich für die Vorrichtung/das Verfahren für einen alternativ dreidimensionalen oder zweidimensionalen Druck in zwei unterschiedlichen Auftragsmodi eignen.

In Figur 15 ist eine Variante gezeigt, bei der ein Druckkopf 5040 einen zentralen Einlasskanal 5041 für ein aushärtbares Material aufweist. Seitlich und bspw. auf einer Kreisbahn um diesen zentralen Kanal 5041 herum angeordnet sind ein oder mehr Farbeinlasskanäle 5042, 5043, in die eine Druckfarbe dosiert zugeführt werden kann. Bei diesen Druckfarben kann es sich vorzugsweise um übliche Farbzusammenstellungen zur Mischung jeglicher Farben handeln, beispielsweise eine Farbzusammenstellung nach dem RGB-Farbraum oder nach dem CMYK-Farbraum. Zusätzlich kann aus Effizienz-und Kostengründen ein Farbkanal für eine schwarze Farbe vorgesehen sein.

Die Farbkanäle 5042, 5043 münden an einem Mischpunkt 5044 in den zentralen Kanal 5041 und das dort gemischte Material verläuft von hier aus in einem gemeinsamen, zentralen Abgabekanal 5045 zu einer Austrittsdüse 5046.

Mit einem Druckkopf nach dieser Ausgestaltung kann durch entsprechende Zudosierung mit mehreren Farben und einem oder mehreren aushärtbaren Materialien mittels entsprechender Dosiereinheiten aus Farbspeichern bzw. Materialspeichern im Druckkopf selbst eine gezielte Mischung zwischen dem aushärtbaren Material und den Farben hergestellt werden, um hierdurch eine selektive Farbgebung bei individuell hergestellten dreidimensionalen Produkten zu erzielen. Durch entsprechende Ansteuerung kann weiterhin wahlweise ein ungefärbtes insbesondere farbloses dreidimensionales Produkt durch alleinige Zufuhr von aushärtbarem Material hergestellt werden oder ein reiner, zweidimensionaler Farbdruck durch alleinige Zufuhr von Farbe erzeugt werden.

Figur 16 zeigt eine andere Ausführungsform eines erfindungsgemäßen Druckkopfs 6040. Bei diesem Druckkopf sind zwei oder mehr Zufuhrkanäle 6041, 6042 vorhanden, die in eine gemeinsame Düse 6046 münden. In die Zufuhrkanäle 6041, 6042 wird durch eine in dem Druckkopf 6040 vorgeschaltete Dosier-Mischeinheit entweder ausschließlich aushärtbares Material, ausschließlich Farbe oder eine Mischung aus aushärtbarem Material und Farbe eingeführt und aus der Düse 6046 abgegeben. Der Druckkopf ermöglicht in gleicher Weise wie der zuvor erläuterte Druckkopf 5040 drei Auftragsmodi in der zuvor beschriebenen Weise und unterscheidet sich vom Druckkopf 5040 darin, dass die Zumischung in einer vom Druckkopf beabstandeten Dosier-Mischeinheit erfolgt und hierdurch einen kompakteren Aufbau des Druckkopfs ermöglicht.

In Figur 17 ist eine Ausführungsform gezeigt, welche insgesamt 4 Kanäle 7041 - 7044 in einen Druckkopf 7040 zeigt. Der Kanal 7041 ist hierbei zur Zufuhr und Abgabe von einem aushärtbaren Material für den dreidimensionalen Druck vorgesehen und mündet in eine Düse 7041a. Die Kanäle 7042 - 7044 sind zur Zuleitung und Abgabe von Farbe aus dem Druckkopf 7040 bereitgestellt und münden in entsprechende Farbabgabedüsen 7042a - 7044a. Dabei ist zu verstehen, dass diese Farbkanäle 7042 - 7044 ebenfalls innerhalb des Druckkopfs zusammengeführt werden könnten und in eine gemeinsame Abgabedüse münden könnten.

Der Materialzufuhrkanal 7041 mündet in eine Düse 7041a, die an einer Fläche 7047 des Druckkopfs 7040 angeordnet ist. Diese Fläche 7047 ist in einem Winkel α schräg geneigt zu der Fläche 7048, in welche die Farbkanäle 7042 - 7044 münden, angeordnet. Die Ausgestaltung des Druckkopfs 7040 eignet sich aufgrund dieser Formgebung insbesondere dazu, um dreidimensionale Produkte in einem kontinuierlichen Herstellungsverfahren herzustellen, bei dem die Auftragsebene schräg zu der Vorschubrichtung steht, die zwischen zwei Schichtaufträgen ausgeführt wird, insbesondere die Auftragsebene schräg zu der Substratplattenoberfläche liegt. Der Druckkopf 7040 eignet sich in gleicher Weise zur Ausführung von insgesamt drei Auftragsmodi in der zuvor beschriebenen Weise. Im Unterschied zu der Ausführungsweise mit den Druckköpfen 5040 und 6040 wird beim Druckkopf 7040 jedoch bei der Herstellung selektiv eingefärbter individueller dreidimensionaler Produkte der Farbauftrag separat auf eine bereits aufgetragene Schicht des aushärtbaren Materials durchgeführt, wobei hierbei wahlweise auf eine zuvor mittels der Auftragsdüse 7041a aufgetragene und noch nicht vollständig ausgehärtete Materialschicht aufgetragen wird, um ein Eindringen der Farbe in das aushärtbare Material vor dessen Aushärtung zu erzielen oder der Farbauftrag auf eine bereits ausgehärtete Schicht erfolgt und nachfolgend durch entsprechende Beschichtung mit einem aushärtbaren Material versiegelt wird.

In Figur 18 ist schließlich eine vierte Ausführungsform eines Druckkopfs 8040 gezeigt, bei dem eine Mehrzahl von Leitungskanälen 8041-8043 für aushärtbares Material und eine Mehrzahl von Leitungskanälen 8044-8046 für Farbe in einer parallel nebeneinander ausgeführten Anordnung bereitgestellt sind. Die Kanäle für Material und Farbe sind dabei wechselweise nebeneinander angeordnet. Mit diesem Druckkopf kann nach Art eines Matrixdrucks in schneller und effizienter Weise sowohl ein individuelles dreidimensionales Produkt als auch ein zweidimensionaler Druck auf einem Druckträger ausgeführt werden. Dabei kann der erste und zweite Auftragsmodus und ebenso der dritte Auftragsmodus ausgeführt werden, wobei durch entsprechende enge Anordnung der Düsen zueinander hier auch ein simultaner Auftrag von Farbe und aushärtbarem Material zur Herstellung selektiv eingefärbter individueller dreidimensionaler Produkte durchgeführt werden kann. In gleicher Weise eignet sich der Druckkopf 8040 aber zu einer zeitversetzten Herstellung solcher selektiver Einfärbungen an dreidimensionalen Produkten, wie dies zuvor für den Druckkopf 7040 beschrieben wurde.

Die zuvor erläuterten Druckköpfe eignen sich ebenfalls dafür, eine Mehrzahl unterschiedlicher aushärtbarer Materialien aufzutragen, beispielsweise Materialien mit unterschiedlichen mechanischen, elektrischen, chemischen Eigenschaften oder in ihren Eigenschaften übereinstimmende Materialien in unterschiedlicher Farbgebung, um daraus, beispielsweise in einem RGB-Farbraum, ein aushärtbares Material in beliebiger Farbe zu mischen.

Grundsätzlich können die zuvor erörterten Druckköpfe 5040 - 8040 anstelle des Drucckopfs 4040 in der Vorrichtung gemäß Figur 14 eingesetzt werden und sind dann entlang der Achse 4023 beweglich. Dabei können auch mehrere solche Druckköpfe entlang der Achse 4023 oder auf hierzu parallelen Achsen angeordnet sein, um eine schnelle und effiziente Fertigung zu erlauben. Die Druckköpfe können simultan und synchron ansteuerbar sein oder können individuell ansteuerbar sein, um sie unabhängig voneinander bewegen zu können.

## Patentansprüche

1. Vorrichtung zur Herstellung von Produkten mit individueller Geometrie, umfassend
- eine Substratplatte (2010),
- eine Materialauftragsvorrichtung zum Auftragen von Material auf die Substratplatte (2010), vorzugsweise oberhalb der Substratplatte (2010),
- eine Steuerungsvorrichtung, welche signaltechnisch mit der Materialauftragsvorrichtung (2030) gekoppelt ist,
- die Steuerungsvorrichtung ausgebildet ist, um die Materialauftragsvorrichtung (2030) solcherart anzusteuern, dass sie das Material selektiv auf vorbestimmte Bereiche abgibt, welche dem Querschnitt eines Produkts in der jeweiligen Schicht entsprechen,
- die Steuerungsvorrichtung ausgebildet ist, um die Materialauftragsvorrichtung (2030) und/oder die Fördervorrichtung so anzusteuern, dass eine Schicht in einer Dicke zwischen 5 µm und 200 µm aufgetragen wire durch gekennzeichnet, dass
- die Substratplatte (2010) in mehrere Substratplattensegmente (212a-c, 2010a-c) unterteilt ist, die lösbar miteinander oder mit einem Grundträger verbunden sind, und
- die Substratplattensegmente (212a-c, 2010a-c) als Segmente einer Endlosfördervorrichtung ausgebildet sind.

2. Vorrichtung nach Anspruch 1, **dadurch gekennzeichnet, dass** die Substratplattensegmente (212a-c, 2010a-c) relativ in der Höhe zueinander zu bewegen sind, so dass die Produkte in unterschiedlichen Fertigungsstadien auf den unterschiedlichen Substratplattensegmenten (212a-c, 2010a-c) hergestellt werden und das oder die Produkte, die auf einem ersten Substratplattensegment (212a-c, 2010a-c) hergestellt worden sind, mit dem Substratplattensegment (212a-c, 2010a-c) zu entnehmen und hiervon abzulösen, bevor ein oder mehrere Produkte von einem anderen Substratplattensegment (212a-c, 2010a-c) entnommen und abgelöst werden.

3. Vorrichtung zur Herstellung von Produkten mit individueller Geometrie, umfassend
- eine Substratplatte (2010),
- eine Materialauftragsvorrichtung (2030) zum Auftragen von Material auf die Substratplatte (2010), vorzugsweise oberhalb der Substratplatte (2010),
- eine Steuerungsvorrichtung, welche signaltechnisch mit der Materialauftragsvorrichtung (2030) gekoppelt ist,
- die Steuerungsvorrichtung ausgebildet ist, um die Materialauftragsvorrichtung (2030) solcherart anzusteuern, dass sie das Material selektiv auf vorbestimmte Bereiche abgibt, welche dem Querschnitt eines Produkts in der jeweiligen Schicht entsprechen, und **dadurch gekennzeichnet, dass**
- die Substratplatte (2010) in mehrere Substratplattensegmente (212a-c, 2010a-c) unterteilt ist, die lösbar miteinander oder mit einem Grundträger verbunden sind,
- die Substratplattensegmente (212a-c, 2010a-c) als Segmente einer Endlosfördervorrichtung ausgebildet sind, und
- die Substratplattensegmente (212a-c, 2010a-c) relativ in der Höhe zueinander bewegbar, sind so dass die Produkte in unterschiedlichen Fertigungsstadien auf den unterschiedlichen Substratplattensegmenten (212a-c, 2010a-c) herstellbar sind und das oder die Produkte, die auf einem ersten Substratplattensegment (212a-c, 2010a-c) hergestellt worden sind, mit dem Substratplattensegment (212a-c, 2010a-c) zu entnehmen und hiervon abzulösen sind, bevor ein oder mehrere Produkte von einem anderen Substratplattensegment (212a-c, 2010a-c) entnommen und abgelöst werden.

4. Vorrichtung nach Anspruch 3, **dadurch gekennzeichnet, dass** die Steuerungsvorrichtung ausgebildet ist, um die Materialauftragsvorrichtung (2030) und/oder die Fördervorrichtung so anzusteuern, dass eine Schicht in einer Dicke zwischen 5 µm und 200 µm aufgetragen wird.

5. Vorrichtung nach Anspruch 1 oder 3, **dadurch gekennzeichnet, dass** die Materialauftragsvorrichtung (2030) zum simultanen Auftragen einer Materialschicht oberhalb einer Anzahl der mehreren Substratplattensegmente (212a-c, 2010a-c) in einem Arbeitsgang ausgebildet ist.

6. Vorrichtung nach Anspruch 1 oder 3, **dadurch gekennzeichnet, dass** die Materialauftragsvorrichtung (2030) relativ zur Substratplatte (2010) zum Auftragen des Materials auf die Substratplatte (2010) verfährt.

7. Vorrichtung nach Anspruch 1 - 3, **dadurch gekennzeichnet, dass** zumindest eine Hubvorrichtung angeordnet ist, welche mit jedem Substratplattensegment (212a-c, 2010a-c) gekoppelt ist oder gekoppelt werden kann, um während des Herstellungsvorgangs das jeweilige Substratplattensegment (212a-c, 2010a-c) unabhängig von den anderen Substratplattensegmenten (212a-c, 2010a-c) in einer vertikalen Richtung anzuheben und abzusenken.

8. Vorrichtung nach Anspruch 1 oder 3, **dadurch gekennzeichnet, dass** die Substratplattensegmente (212a-c, 2010a-c) an einem Endlosförderband (2020) befestigt sind oder solcherart miteinander verbunden sind, dass sie die Gestalt einer Gliederkette eines Endlosförderbands (2020) bilden.

9. Vorrichtung nach Anspruch 1 oder 3, **dadurch gekennzeichnet, dass** auf alle Substratplattensegmente (212a-c, 2010a-c) mit einer einzigen, gemeinsamen Schichtauftragsvorrichtung Schichten aufgetragen werden kann.

## Claims

1. Device for manufacturing products having individual geometry, comprising a substrate plate (2010),
- a material application device for applying material to the substrate plate (2010), preferably above the substrate plate (2010),
- a control device which is signal-technically coupled to the material application device (2030),
- the control device is configured to control the material application device (2030) to selectively dispense the material onto predetermined sections corresponding to the cross-section of a product in the respective layer,
- the control device is configured to control the material application device (2030) and/or the conveying device such that a layer is applied in a thickness between 5 µm and 200 µm,
**characterized in that**
- the substrate plate (2010) is divided into a plurality of substrate plate segments (212a-c, 2010a-c) which are detachably connected to each other or to a base support, and
- the substrate plate segments (212a-c, 2010a-c) are designed as segments of an endless conveyor device.

2. Device according to claim 1, **characterised in that** the substrate plate segments (212a-c, 2010a-c) are to be moved relative to each other in height so that the products are manufactured at different stages of manufacture on the different substrate plate segments (212a-c, 2010a-c) and the product or products manufactured on a first substrate plate segment (212a-c, 2010a-c) are removed with the substrate plate segment (212a-c, 2010a-c) and detached therefrom before one or more products are removed and detached from another substrate plate segment (212a-c, 2010a-c).

3. Device for manufacturing products having individual geometry, comprising
- a substrate plate (2010),
- a material application device (2030) for applying material to the substrate plate (2010), preferably above the substrate plate (2010),
- a control device which is signal-technically coupled to the material application device (2030),
- the control device is configured to control the material application device (2030) to selectively dispense the material onto predetermined sections corresponding to the cross-section of a product in the respective layer,
**characterized in that**
- the substrate plate (2010) is divided into a plurality of substrate plate segments (212a-c, 2010a-c) which are detachably connected to each other or to a base support,
- the substrate plate segments (212a-c, 2010a-c) are designed as segments of an endless conveyor device, and
- the substrate plate segments (212a-c, 2010a-c) are movable relative to each other in height so that the products are manufacturable at different stages of manufacture on the different substrate plate segments (212a-c, 2010a-c), and the product or products manufactured on a first substrate plate segment (212a-c, 2010a-c) are to be removed with the substrate plate segment (212a-c, 2010a-c) and detached therefrom before one or more products are removed from and detached from another substrate plate segment (212a-c, 2010a-c).

4. Device according to claim 3, **characterized in that** the control device is configured to control the material application device (2030) and/or the conveying device such that a layer is applied in a thickness between 5 µm and 200 µm.

5. Device according to claim 1 or 3, **characterized in that** the material application device (2030) is configured for simultaneously applying a layer of material above a number of the plurality of substrate plate segments (212a-c, 2010a-c) in an operation.

6. Device according to claim 1 or 3, **characterized in that** the material application device (2030) moves relative to the substrate plate (2010) for applying the material to the substrate plate (2010).

7. Device according to claim 1 - 3, **characterized in that** at least one lifting device is arranged which is or can be coupled to each substrate plate segment (212a-c, 2010a-c) for lifting and lowering the respective substrate plate segment (212a-c, 2010a-c) in a vertical direction independently of the other substrate plate segments (212a-c, 2010a-c) during the manufacturing process.

8. Device according to claim 1 or 3, **characterized in that** the substrate plate segments (212a-c, 2010a-c) are attached to an endless conveyor belt (2020) or are connected to each other in such a way that they create the shape of a link chain of an endless conveyor belt (2020).

9. Device according to claim 1 or 3, **characterized in that** layers can be applied to all substrate plate segments (212a-c, 2010a-c) with a single, common layer application device.

## Revendications

1. Dispositif de fabrication de produits avec une géométrie individuelle, comprenant
- une plaque de substrat (2010),
- un dispositif d'application de matériau pour l'application de matériau sur la plaque de substrat (2010), de préférence au-dessus de la plaque de substrat (2010),
- un dispositif de commande qui est couplé en signal au dispositif d'application de matériau (2030),
- le dispositif de commande est réalisé afin de commander le dispositif d'application de matériau (2030) de telle manière qu'il livre le matériau sélectivement sur des zones prédéterminées qui correspondent à la section transversale d'un produit dans la couche respective,
- le dispositif de commande est réalisé afin de commander le dispositif d'application de matériau (2030) et/ou le dispositif de transport de sorte qu'une couche soit appliquée dans une épaisseur entre 5 µm et 200 µm, **caractérisé en ce que**
- la plaque de substrat (2010) est divisée en plusieurs segments de plaque de substrat (212a-c, 2010a-c) qui sont reliés de manière détachable entre eux ou à un support de base, et
- les segments de plaque de substrat (212a-c, 2010a-c) sont réalisés comme segments d'un dispositif de transport sans fin.

2. Dispositif selon la revendication 1, **caractérisé en ce que** les segments de plaque de substrat (212a-c, 2010a-c) sont à déplacer relativement vers le haut les uns par rapport aux autres de sorte que les produits soient fabriqués dans différents stades de fabrication sur les différents segments de plaque de substrat (212a-c, 2010a-c) et le ou les produits qui ont été fabriqués sur un premier segment de plaque de substrat (212a-c, 2010a-c), sont à retirer avec le segment de plaque de substrat (212a-c, 2010a-c) et à détacher de celui-ci avant qu'un ou plusieurs produits ne soient retirés et détachés d'un autre segment de plaque de substrat (212a-c, 2010a-c).

3. Dispositif de fabrication de produits avec une géométrie individuelle, comprenant
- une plaque de substrat (2010),
- un dispositif d'application de matériau (2030) pour l'application de matériau sur la plaque de substrat (2010), de préférence au-dessus de la plaque de substrat (2010),
- un dispositif de commande qui est couplé en signal au dispositif d'application de matériau (2030),
- le dispositif de commande est réalisé afin de commander le dispositif d'application de matériau (2030) de telle manière qu'il livre le matériau sélectivement sur des zones prédéterminées qui correspondent à la section transversale d'un produit dans la couche respective, et **caractérisé en ce que**
- la plaque de substrat (2010) est divisée en plusieurs segments de plaque de substrat (212a-c, 2010a-c) qui sont reliés de manière détachable entre eux ou à un support de base,
- les segments de plaque de substrat (212a-c, 2010a-c) sont réalisés comme segments d'un dispositif de transport sans fin, et
- les segments de plaque de substrat (212a-c, 2010a-c) sont mobiles relativement vers le haut l'un par rapport à l'autre de sorte que les produits puissent être fabriqués dans différents stades de fabrication sur les différents segments de plaque de substrat (212a-c, 2010a-c) et le ou les produits qui ont été fabriqués sur un premier segment de plaque de substrat (212a-c, 2010a-c), sont à retirer avec le segment de plaque de substrat (212a-c, 2010a-c) et à détacher de celui-ci avant qu'un ou plusieurs produits ne soient retirés et détachés d'un autre segment de plaque de substrat (212a-c, 2010a-c).

4. Dispositif selon la revendication 3, **caractérisé en ce que** le dispositif de commande est réalisé afin de commander le dispositif d'application de matériau (2030) et/ou le dispositif de transport de sorte qu'une couche soit appliquée dans une épaisseur entre 5 µm et 200 µm.

5. Dispositif selon la revendication 1 ou 3, **caractérisé en ce que** le dispositif d'application de matériau (2030) est réalisé pour l'application simultanée d'une couche de matériau au-dessus d'un nombre des plusieurs matériaux de plaque de substrat (212a-c, 2010a-c) dans un cycle de travail.

6. Dispositif selon la revendication 1 ou 3, **caractérisé en ce que** le dispositif d'application de matériau (2030) se déplace par rapport à la plaque de substrat (2010) pour l'application du matériau sur la plaque de substrat (2010).

7. Dispositif selon les revendications 1 à 3, **caractérisé en ce qu'**au moins un dispositif de levage est agencé, lequel est couplé ou peut être couplé à chaque segment de plaque de substrat (212a-c, 2010a-c) afin de lever et d'abaisser pendant le processus de fabrication le segment de plaque de substrat (212a-c, 2010a-c) respectif indépendamment des autres segments de plaque de substrat (212a-c, 2010a-c) dans un sens vertical.

8. Dispositif selon la revendication 1 ou 3, **caractérisé en ce que** les segments de plaque de substrat (212a-c, 2010a-c) sont fixés à une bande de transport sans fin (2020) ou sont reliés entre eux de telle manière qu'ils prennent la forme d'une chaîne à maillons d'une bande de transport sans fin (2020).

9. Dispositif selon la revendication 1 ou 3, **caractérisé en ce que** des couches peuvent être appliquées sur tous les segments de plaque de substrat (212a-c, 2010a-c) avec un seul dispositif d'application de couche commun.
